**Europäisches Patentamt**

**European Patent Office**

**Office européen des brevets**

(11) Veröffentlichungsnummer: **0 209 781**

**A2**

## (12) EUROPÄISCHE PATENTANMELDUNG

(21) Anmeldenummer: 86109237.7

(22) Anmeldetag: 07.07.86

(51) Int. Cl.⁴: **F 02 P 5/04**

(30) Priorität: 19.07.85 DE 3525869

(43) Veröffentlichungstag der Anmeldung:
28.01.87 Patentblatt 87/5

(84) Benannte Vertragsstaaten:
FR GB IT

(71) Anmelder: TELEFUNKEN electronic GmbH
Theresienstrasse 2
D-7100 Heilbronn(DE)

(71) Anmelder: BAYERISCHE MOTOREN WERKE
Aktiengesellschaft
Postfach 40 02 40 Petuelring 130
D-8000 München 40(DE)

(72) Erfinder: Rodenheber, Rainer
Johann-Strauss-Strasse 100
D-7100 Heilbronn-Biberach(DE)

(72) Erfinder: Wick, Helmut
Eversbuschstrasse 14
D-8000 München 50(DE)

(74) Vertreter: Maute, Hans-Jürgen, Dipl.-Ing.
TELEFUNKEN electronic GmbH Theresienstrasse 2
D-7100 Heilbronn(DE)

(54) Elektronisches Zündsystem.

(57) Die Erfindung betrifft ein elektronisches Zündsystem für eine Brennkraftmaschine, bei dem ein von der Kurbelwellenlage abhängiges Eingangssignal über eine erste Steuer- oder Regeleinrichtung in ein erstes digitales Steuersignal geformt wird, das einer Verzögerungseinrichtung zugeführt wird, die die Schaltflanken des ersten Steuersignals verzögert und daraus ein zweites Steuersignal bildet.

Dabei wird aus der ersten Schaltflanke des ersten Steuersignals ein sägezahnförmiges Signal mit einer ansteigenden und einer abfallenden Flanke abgeleitet, deren Endpunkt die erste Schaltflanke des zweiten Steuersignals definiert und dadurch den verzögerten Zündzeitpunkt festlegt, wobei das Verhältnis der Steilheiten beider Flanken ein Maß für die Verzögerung der ersten Schaltflanke des zweiten Steuersignals gegenüber der ersten Schaltflanke des ersten Steuersignals ist. Die zweite Schaltflanke des ersten Steuersignals ist u.a. eine Funktion der elektrischen Parameter der Zündspule und wird durch Bildung eines trapezförmigen Signals mit einer ansteigenden und einer abfallenden Flanke verzögert, wobei die Steilheiten beider Flanken gleich groß sein können. Die ansteigende Flanke dieses Signals wird mit der ersten Schaltflanke des ersten Steuersignals gestartet und über eine Logikschaltung wird ein Zeitintervall ermittelt, mit dessen Beginn der weitere Anstieg dieser Flanke gestoppt und nach dessen Ablauf die abfallende Flanke gestartet wird, durch deren Endpunkt die zweite Schaltflanke des zweiten Steuersignals zur Festlegung des Aufladezeitpunkts der Zündspule definiert ist.

./...

FIG. 1

1

Heilbronn, den 20.06.1985
PTL-Se/sl      HN 85/23

Elektronisches Zündsystem

Die Erfindung betrifft ein elektronisches Zündsystem
für eine Brennkraftmaschine mit einem von der Kurbelwellenlage abhängigen Eingangssignal, welches über eine
erste Steuer- oder Regeleinrichtung in ein erstes digitales Steuersignal geformt wird, das einer Verzögerungseinrichtung zugeführt wird, die die Schaltflanken des
ersten Steuersignals verzögert und daraus ein zweites
Steuersignal bildet.

Für Brennkraftmaschinen gibt es verschiedene elektronische Steuer- oder Regelungssysteme, um eine Optimierung
des Betriebszustandes zu erzielen. Dabei werden verschiedene physikalische bzw. elektronische Parameter
wie Gemischzusammensetzung, Verbrauch, Leistung, Drehmoment, Abgaszusammensetzung, Zündenergie, Schließzeit,
Zündzeitpunkt und dergleichen herangezogen.

Im Zusammenhang mit den Abgasbestimmungen kommt unter
anderem einer Zünzeitpunktsteuerung oder Zündzeitpunktregelung besondere Bedeutung zu, da bestimmte Zünzeitpunktverzögerungskennlinien die Stickoxide erheblich zu
verringern hilft, ohne daß dabei die übrigen Abgasbestandteile signifikant erhöht würden.

Ein Vorverlegen des Zündzeitpunktes in Richtung der
Klopfgrenze würde zwar die Leistungsausbeute steigern,
aber die Stickoxidanteile erhöhen. Wird der Zündzeitpunkt relativ weit nach "spät" verstellt, würde die Brennkraftmaschine weniger Leistung erzeugen, da das Maximum des Druckverlaufs im Brennraum in Bezug auf die Kurbelwellenlage immer ungünstiger wird und die Brennkraftmaschine relativ viel thermische Energie nicht in mechanische Energie umsetzen kann. Des weiteren arbeitet die Brennkraftmaschine dann mit relativ hohem Kraftstoffverbrauch.

Neben dem geregelten Katalysator, der nicht für jede ältere bereits im Betrieb befindliche Brennkraftmaschine einsetzbar ist, sind die auf dem Markt befindlichen Abgasverminderungssysteme für Brennkraftmaschinen entweder wartungsintensiv oder teuer oder mit Auflagen für den Betreiber verbunden, wie etwa die Bindung an bleifreies Benzin. Des weiteren sind diese bekannten Systeme nicht für alle Brennkraftmaschinen einsetzbar bzw. verfügbar.

Die Beeinflussung des Zündzeitpunktes in Abhängigkeit von Drehzahl und Saugrohrdruck erfolgt bei den meisten Brennkraftmaschinen über mechanische Komponenten wie Fliehkraftverstellung und Unterdruckdose. Rechnergesteuerte Zündsysteme ermitteln bei jeder Kurbelwellenumdrehung einen für den augenblicklichen Betriebszustand adäquaten Zündwinkel in Abhängigkeit von Drehzahl, Druck, Temperatur, Drehmoment, Last und dergleichen.

Bei elektronischen Zündsystemen wird häufig ein kontaktlos arbeitender Signalgeber eingesetzt, dessen Ausgangssignal zu einem digitalen elektrischen Steuersignal aufbereitet wird, dessen erste Schaltflanke dem Zündvorgang und dessen zweite Schaltflanke dem Beginn des Aufladevorgangs der Zündspule über eine nachgeschaltete Steuer- oder Regelschaltung zugeordnet wird.

Aus der DE-OS 30 30 190 ist eine Zündanlage für eine Brennkraftmaschine bekannt, bei der die Phasenlage des Gebersignals oder Eingangssignals durch eine Impedanz veränderbar ist. Dies wird durch elektronische Mittel erreicht, indem weitere Impedanzen zu- oder abgeschaltet oder in ihrem Wert verändert werden, wenn bestimmte Betriebsparameter wie Leerlauf, Vollastbetrieb, oder Drehzahl dies erforderlich machen.

Diese bekannte Zündanlage ist nicht unmittelbar an jedes elektronische Eingangssignal eines Signalgebers anschließbar, vor allem dann nicht, wenn die zweite Schaltflanke des Eingangssignals, der der Aufladevorgang der Zündspule zugeordnet ist, ohne Bezug auf die jeweiligen elektrischen Parameter der Primärwicklung der Zündspule wie Primärinduktivität, Primärwiderstand, Primärstrom, Batteriespannung etc., in einem Steuergerät erzeugt wird.

Deshalb liegt der vorliegenden Erfindung die Aufgabe zugrunde, ein elektronisches Zündsystem für eine Brennkraftmaschine anzugeben, das unmittelbar an verschiedene Eingangssignale eines Signalgebers oder an bereits bestehende Zündsysteme angepaßt werden kann und eine Veränderung des Zündzeitpunktes in Richtung Spätverstellung vornimmt, wobei die Schließzeitinformation für das Laden der Zündspule entsprechend berücksichtig wird.

Diese Aufgabe wird bei einem elektronischen Zündsystem der eingangs beschriebenen Art erfindungsgemäß dadurch gelöst, daß aus der ersten Schaltflanke des ersten Steuersignals als Funktion der Betriebsparameter der Brennkraftmaschine ein sägezahnförmiges Signal mit einer ansteigenden und einer abfallenden Flanke abgeleitet wird, deren Endpunkt die erste Schaltflanke des zweiten Steuersignals definiert, wobei das Verhältnis der Steilheiten beider Flanken ein Maß für die Verzögerung der ersten Schaltflanke des zweiten Steuersignals gegenüber der ersten Schaltflanke des ersten Steuersignals ist, und daß die zweite Schaltflanke des ersten Steuersignals, die eine Funktion der elektrischen Parameter ist, durch Bildung eines trapezförmigen Signals mit einer ansteigenden und einer abfallenden Flanke verzögert wird, und die ansteigende Flanke mit der ersten Schaltflanke des ersten Steuersignals gestartet wird, daß über eine Logikschaltung ein Zeitintervall ermittelt wird, mit dessen Beginn der weitere Anstieg der Flanke gestoppt und nach dessen Ablauf die abfallende Flanke gestartet wird, durch deren Endpunkt die zweite Schaltflanke des zweiten Steuersignals definiert ist.

Dies kann in vorteilhaften Weiterbildungen dadurch geschehen, daß über eine Steuerkennlinie, die beispielsweise durch drehzahl- und zeitabhängige Spannungswerte vorgegeben ist, die Steilheit der ansteigenden Flanke des sägezahnförmigen Signals proportional verändert wird, während die Steilheit der abfallenden Flanke des sägezahnförmigen Signals unverändert bleibt.

Weitere vorteilhafte Ausgestaltungen der Erfingung ergeben sich aus den Unteransprüchen.

Das erfindungsgemäße elektronische Zündsystem hat den wesentlichen Vorteil, daß es eine große Kompatibilität zu bestehenden Zündsystemen aufweist und an verschiedene Signalgeber unmittelbar angeschlossen werden kann und dadurch Überlagerungs-Zündkennfelder beispielsweise zur Beeinflussung der Schadstoffemissionswerte erzeugt werden können.

Ausführungsbeispiele der Erfindung sind in den Zeichnungen dargestellt und werden im folgenden näher beschrieben:

Es zeigen:

Figur 1
Ein Blockschaltbild eines elektronischen Zündsystems

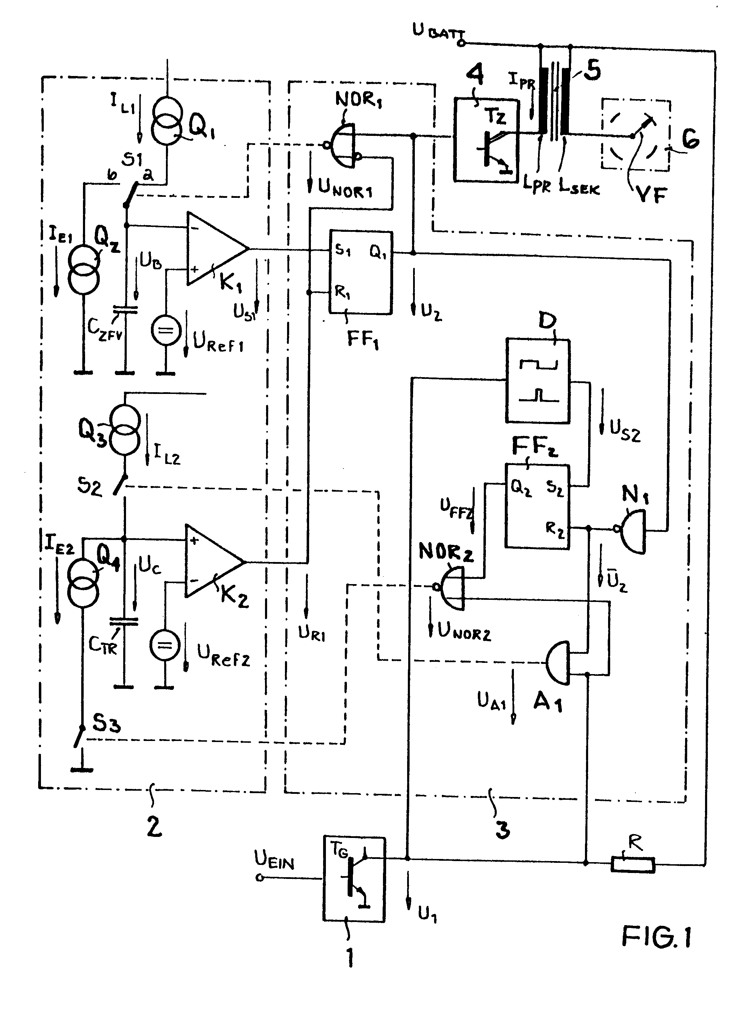

Figur 2a - 2o
Impulsdiagramme und Signalverläufe von Spannungen oder
Strömen in der Figur 1.

Figur 3
Ein Blockschaltbild eines elektronischen Zündsystems,
bei dem die Schließzeitinformation nicht in jedem Betriebszustand identisch mit der vom Steuersignal ($U_1$)
vorgegebenen ist.

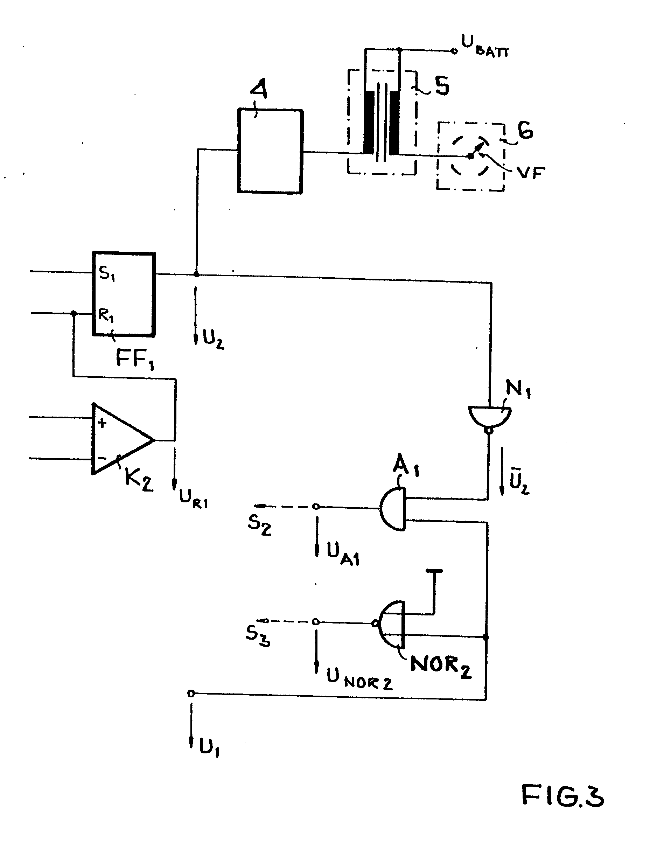

Figur 4a - 4k
Impulsdiagramme und Signalverläufe von Spannungen oder
Strömen in der Figur 3.

Figur 5
Ein Blockschaltbild eines elektronischen Zündsystems
mit einem Regelkreis für die Schließzeit des Primärstromflusses in der Zündspule.

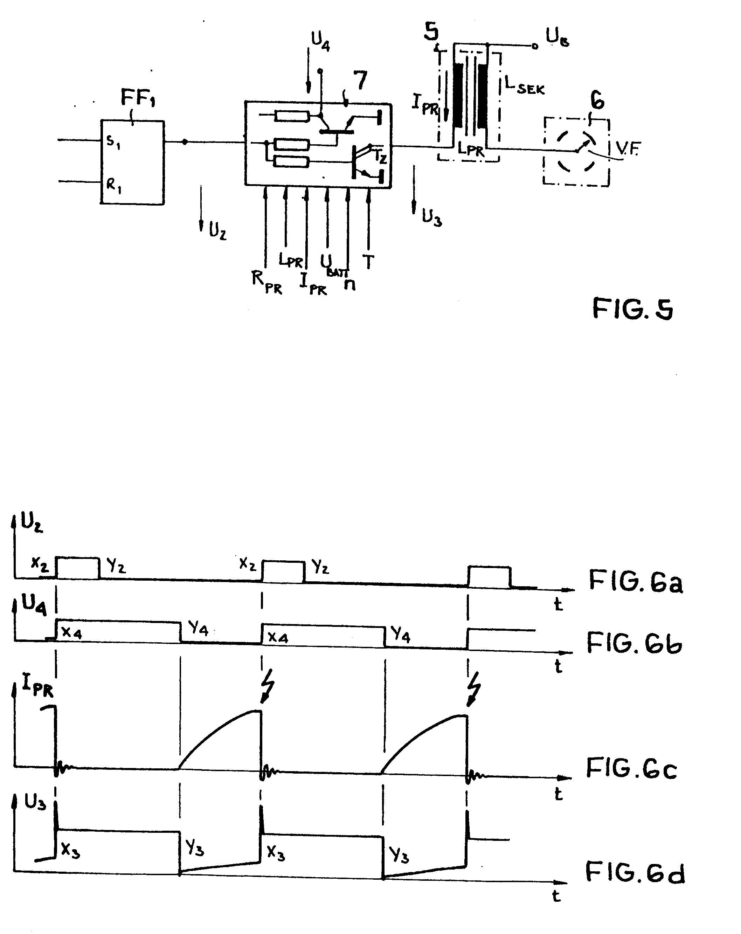

Figur 6a - 6d
Impulsdiagramme und Signalverläufe von Spannungen oder
Strömen in der Figur 5.

Figur 7
Ein Detailschaltbild für die Realisierung des sägezahnförmigen Signals mit Beeinflussung der Steilheit der
Flanken $B_1$ und $B_2$.

Figur 8a-b

Zeitlicher Verlauf des Umschaltvorgangs innerhalb der Steuerkennlinie und Zündflankenverzögerung ZFV.

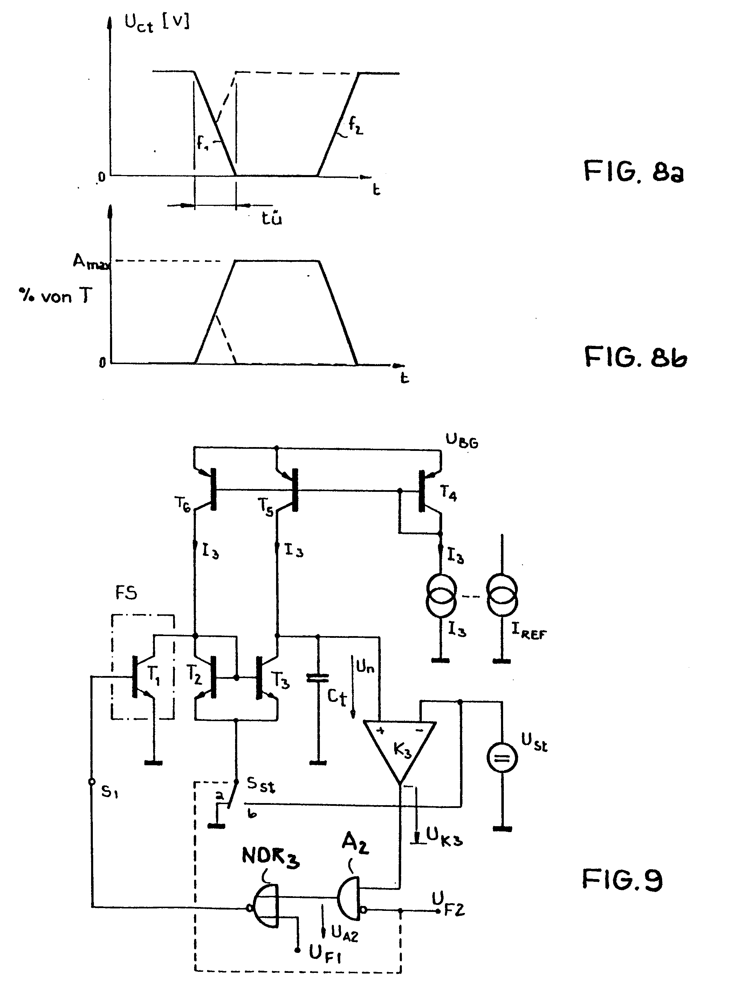

Figur 9 Ein Detailschaltbild für die Realisierung der Steuerkennlinie $U_n$.

Figur 10

Ein Blockschaltbild zur Beeinflussung der Steuerkennlinie $U_n$ in Abhängigkeit von Drehzahl n, Vollastschalter VS, Leerlaufschalter LS, Temperaturschalter TS und Batterieschwellenschalter $U_{BS}$.

Figur 11a - 11k Impulsdiagramme und Signalverläufe von Spannungen in den Figuren 9 und 10.

Figur 12 Schaubild einer Steuerkennlinie, die auf die Reduzierung von $NO_x$ - Anteilen im Abgas einer Brennkraftmaschine ausgelegt ist.

Figur 13 Systemschaltung eines elektronischen Zündsystems zur Reduzierung der Stickoxid-Anteile im Abgas einer Brennkraftmaschine.

Figur 14 Diagramm für die normierte Zündflankenverzögerung (ZFV) in Abhängigkeit von der Spannung am Kondensator $C_t$.

Figur 15

Detailschaltbild zur Realisierung eines direkt proportionalen und gleichsinnig verlaufenden Zusammenhangs zwischen Spannung am Kondesator $C_t$ und der Zündflankenverzögerung ZFV.

- 7 -

0209781

Figur 16
Prinzip-Schaltbild zur Erzeugung einer drehzahlabhängigen und direkt proportionalen Steuerspannung $U_{Ci}^{*}$.

Figur 17a - 17b
Schaubilder für den Verlauf verschiedener Steuerspannungen.

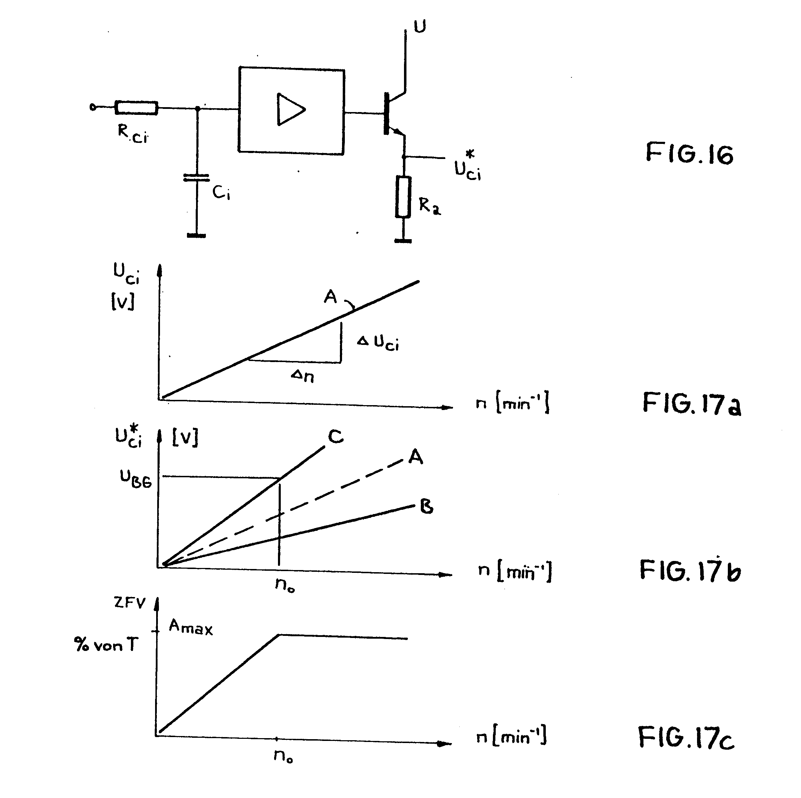

Figur 17c
Schaubild des Verlaufs der Zündflankenverzögerung bei einer Realisierung der Steuerkennlinie gemäß Figur 16, 17a - 17b.

Figur 18
Detailschaltbild für die bistabilen Kippstufen $FF_1$, $FF_2$.

Figur 19
Analogrechnerschaltung zur Erzeugung einer Multifunktionskennlinie $U_{MK}$.

Figur 20a
Diagramm eines Zündungskennfeldes für Frühzündung.

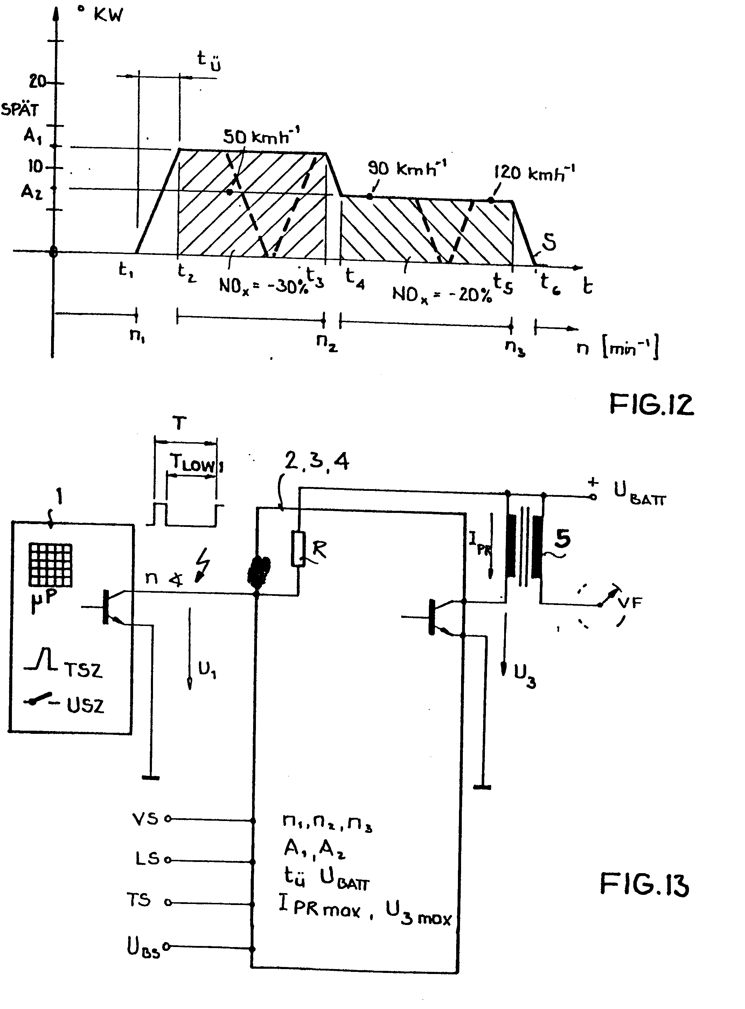

Figur 20b
Diagramm des Zündungskennfeldes bei drehzahlabhängigem Zündwinkel und druckkonstantem Verlauf entsprechend Figur 12 für Spätzündung.

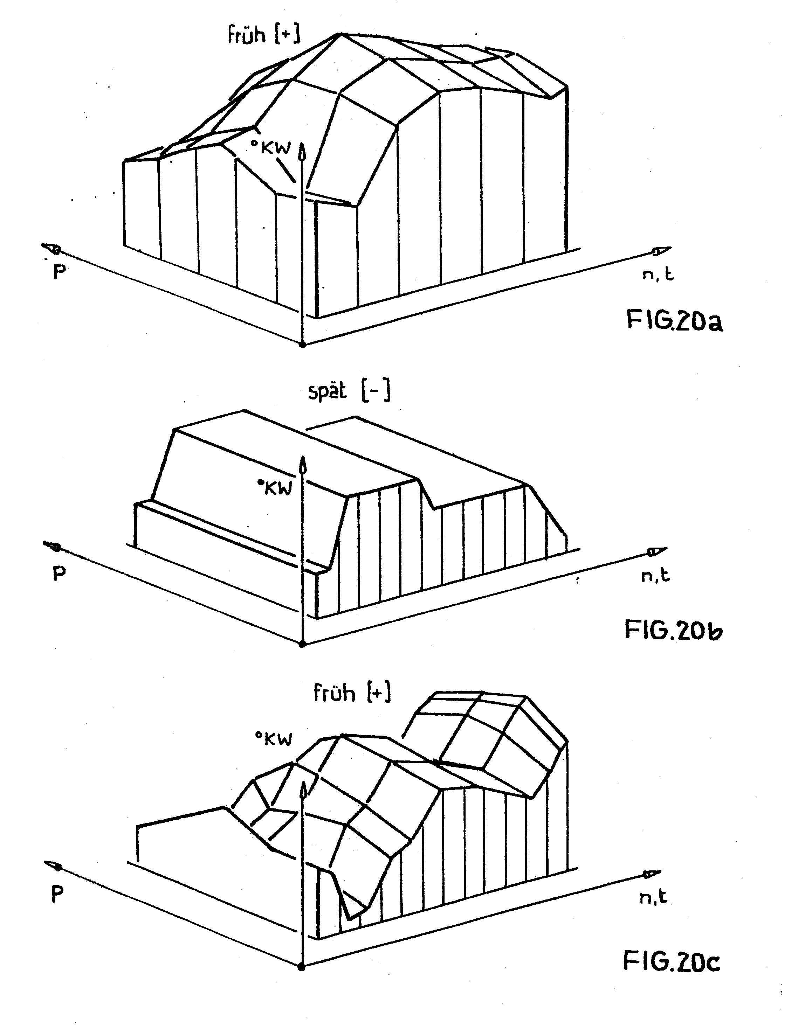

Figur 20c
Diagramm eines Überlagerungszündungskennfeldes, das aus der Substraktion des Kennfeldes der Figur 20b vom Kennfeld der Figur 20a hervorgeht.

Ein elektronisches Zündsystem zur Beeinflussung von Zündzeitpunkt und Schließzeit kann entsprechend dem Blockschaltbild in Figur 1 mit mehreren Funktionsblöcken realisiert werden:

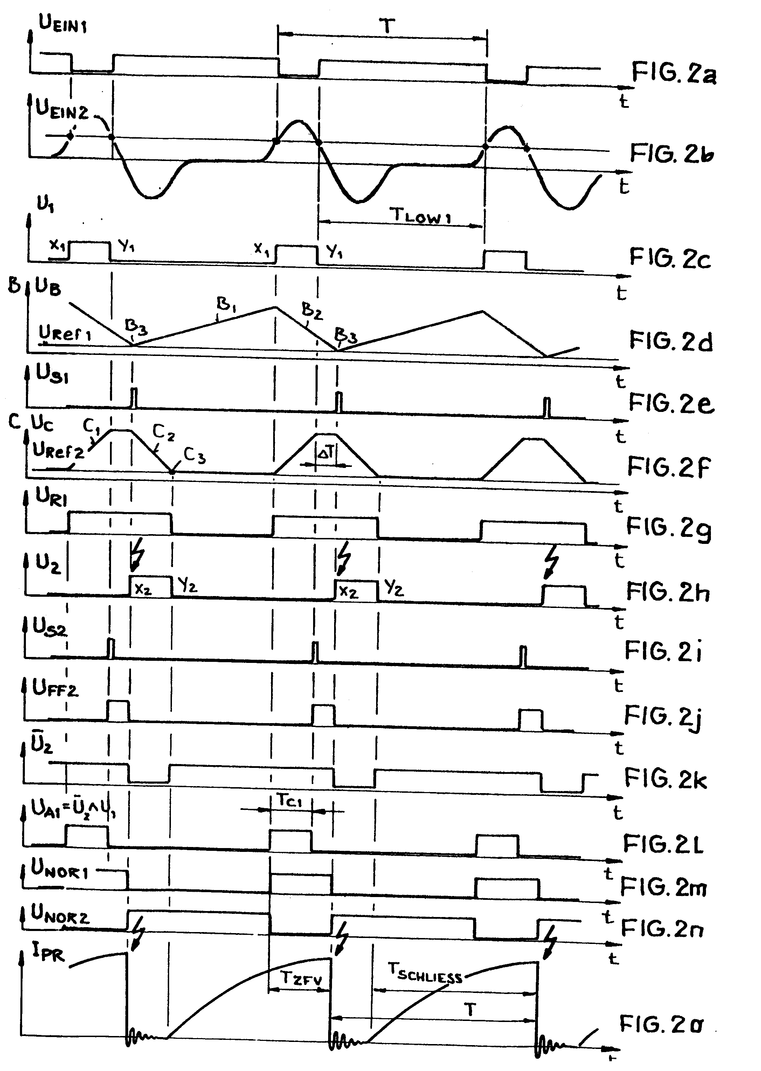

Der erste Funktionsblock besteht aus einer ersten Steuer- oder Regeleinrichtung 1, welche stellvertretend steht für ein bereits bestehendes Zündsystem. Anstelle des Transistors $T_G$ kann auch der gerinfügig modifizierte mechanisch gesteuerte Unterbrecherschalter konventioneller Zündsysteme verstanden werden. Schließt man die Steuer- oder Regeleinrichtung 1 mit dem ohmschen Widerstand R ab, so erhält man ein erstes digitales Steuersignal $U_1$ gemäß Figur 2c mit einer ersten Schaltflanke $X_1$, der Low-High Flanke, und einer zweiten Schaltflanke $Y_1$, der High-Low Flanke. Der Steuereinrichtung 1 kann ein von einem kontaktlos arbeitenden Geber abgeleitetes Signal $U_{EIN}$ zugeführt werden. Dieses kann in einem Hall-Geber erzeugt worden sein und gemäß Figur 2a ein festes Tastverhältnis von beispielsweise 20 % Low-Phase und 80 % High-Phase aufweisen. Es kann aber auch in einem induktiven Geber erzeugt werden und die prinzipielle Gestalt gemäß Figur 2b aufweisen. Als Eingangssignal für die erste Steuereinrichtung 1 eignet sich aber auch das elektrische Schaltsignal eines mechanisch gesteuerten Unterbrecherkontaktes.

Im zweiten Funktionsblock ist eine Verzögerungseinrichtung 2 dargestellt, die die Schaltflanken $X_1$, $Y_1$ des ersten Steuersignals $U_1$ verzögert, wodurch ein zweites Steuersignal $U_2$ mit den entsprechend verzögerten Schaltflanken $X_2$, $Y_2$ gemäß Figur 2h abgeleitet werden kann.

Im dritten Funktionsblock ist eine Logikschaltung 3 gezeigt, die dafür sorgt, daß die Schalter $S_1$, $S_2$, $S_3$ in der Verzögerungseinrichtung 2 zu ganz bestimmten Schaltflanken oder Zeiten geöffnet oder geschlossen werden, und dadurch aus dem ersten Steuersignal $U_1$ das zweite verzögerte Steuersignal $U_2$ gebildet wird, welches einem vierten Funktionsblock, der Endstufe 4 zugeführt wird, deren Ausgang mit einem fünften Funktionsblock, der Zündspule 5 verbunden ist. Dabei liegen je ein Anschluß von Primär- und Sekundärwicklung der Zündspule 5 an der Versorgungsspannung $U_{BATT}$ des Bordnetzes, während der andere Anschluß der Primärwicklung in der Regel mit dem offenen Kollektor eines Leistungstransistors $T_Z$ in Darlington-Schaltung der Endstufe 4 verbunden ist.

Der andere Anschluß der Sekundärwicklung der Zündspule 5 führt auf einen sechsten Funktionsblock, den Zündverteiler 6, der in Figur 1 beispielsweise als Vierzylinder-Verteiler mit einem Verteilerfinger VF dargestellt ist.

Das Zusammenwirken der einzelnen Funktionsblöcke wird anhand der Figuren 1 und 2a - 2o gezeigt.

Das erste Steuersignal $U_1$ der Steuer- oder Regeleinrichtung 1 hat einen in Figur 2c dargestellten Verlauf und wird je einem Eingang eines ersten AND-Gatters $A_1$, eines zweiten NOR-Gatters $NOR_2$ und einem Differenzierglied D zugeführt, das aus der zweiten Schaltflanke $Y_1$, der High-Low Flanke, einen Setzimpuls $U_{S2}$ gemäß Figur 2i erzeugt, der dem Setzeingang $S_2$ einer zweiten bistabilen Kippstufe $FF_2$ zugeführt wird. Der Rücksetzeingang $R_2$ der zweiten bistabilen Kippstufe $FF_2$ wird über ein erstes Negationsglied $N_1$ mit dem invertierten zweiten Steuersignal $U_2$ angesteuert, das auch dem anderen Eingang des ersten AND-Gatters $A_1$ zugeführt ist.

Das Ausgangssignal $U_{FF2}$ der zweiten bistabilen Kippstufe $FF_2$ wird dem anderen Eingang des zweiten NOR-Gatters $NOR_2$ mit dem Ausgangssignal $U_{NOR2}$ zugeführt und ist in Figur 2j dargestellt.

Vom zweiten Steuersignal $U_2$ wird der eine Eingang eines ersten NOR-Gatters $NOR_1$ und über die Endstufe 4 die Primärinduktivität $L_{PR}$ der Zündspule 5 angesteuert. Der negierende andere Eingang des NOR-Gatters $NOR_1$ wird vom Ausgangssignal $U_{R1}$ einer zweiten Komparatorstufe $K_2$ angesteuert, das gleichzeitig dem Rücksetzeingang $R_1$ einer ersten bistabilen Kippstufe $FF_1$ zugeführt ist. Der Setzeingang $S_1$ der ersten bistabilen Kippstufe $FF_1$ wird vom Ausgangssignal $U_{S1}$ einer ersten Komparatorstufe $K_1$ angesteuert. Am Ausgang $Q_1$ der ersten bistabilen Kippstufe $FF_1$ steht das zweite Steuersignal $U_2$ an.

Mit dem Ausgangssignal $U_{NOR1}$ des ersten NOR-Gatters gemäß Figur 2m wird ein erster Schalter $S_1$ angesteuert, der in seinem einem Schaltzustand "a" einen ersten Kondensator $C_{ZFV}$ über eine erste Stromquelle $Q_1$ mit dem Konstantstrom $I_{L1}$ lädt oder in seinem anderen Schaltzustand "b" über eine zweite Konstantstromquelle $Q_2$ mit dem Strom $I_{E1}$ entlädt. Zeigt das Signal $U_{NOR1}$ beispielsweise einen High-Pegel, dann nimmt der erste Schalter $S_1$ die Stellung "b" ein und der erste Kondensator $C_{ZFV}$ wird mit dem Strom $I_{E1}$ entladen. Die aktuelle Spannung $U_B$ am ersten Kondensator $C_{ZFV}$ wird dem negativen Eingang der ersten Komparatorstufe $K_1$ zugeführt, deren positiver Eingang mit einer ersten Referenzspannung $U_{Ref1}$ verbunden ist.

Wenn die Spannung $U_B$ am ersten Kondensator $C_{ZFV}$ kleiner als die erste Referenzspannung $U_{Ref1}$ geworden ist, entsteht am Ausgang der ersten Komparatorstufe $K_1$ das Ausgangssignal $U_{S1}$ gemäß Figur 2e. Während der Low-Phase des Signals $U_{NOR1}$ nimmt der erste Schalter $S_1$ die Stellung "a" ein.

Den Spannungsverlauf $U_B$ am ersten Kondensator $C_{ZFV}$ zeigt Figur 2d. Da erster Lade- bzw. Entladestrom $I_{L1}$ bzw. $I_{E1}$ im allgemeinen nicht gleich groß sind, resultiert aus den Umschaltvorgängen mittels des ersten Schalters $S_1$ am ersten Kondensator ein sägezahnförmiges Signal B mit einer ansteigenden Flanke $B_1$ und einer abfallenden $B_2$, deren Endpunkt $B_3$ dann erreicht wird, wenn der Spannungswert der abfallenden Flanke $B_2$ kleiner als die erste Referenzspannung $U_{Ref1}$ ist. Dann wird gemäß Figur 2e der erste Setzimpuls $U_{S1}$ ausgelöst.

Das Ausgangssignal $U_2$ der ersten bistabilen Kippstufe $FF_1$ stellt das verzögerte zweite Steuersignal mit den entsprechenden Schaltflanken $X_2$, der Low-High Flanke, und $Y_2$, der High-Low Flanke, gemäß Figur 2h dar.

Über den zweiten und dritten Schalter $S_2$, $S_3$ wird ein zweiter Kondensator $C_{TR}$ von Stromquellen $Q_3$, $Q_4$ mit dem Ladestrom $I_{L2}$ geladen oder mit dem zweiten Entladestrom $I_{E2}$ entladen.
Dabei arbeiten zweiter und dritter Schalter $S_2$ bzw. $S_3$ relativ unabhängig voneinander, d.h. es kann Schaltzustände geben, wo beide Schalter geöffnet sind.
Zweiter Lade- bzw. Entladestrom $I_{L2}$, $I_{E2}$ erzeugen am Kondensator $C_{TR}$ den trapezförmigen Spannungsverlauf $U_C$ gemäß Figur 2f. Die Spannung $U_C$ wird dem positiven Eingang eines zweiten Komparators $K_2$ zugeführt, dessen negativer Eingang von einer zweiten Referenzspannung $U_{Ref2}$ gespeist wird.

Dabei ist vorauszuschicken, daß die bistabilen Kippstufen $FF_1$ und $FF_2$ sich von üblichen bistabilen Kippstufen dadurch unterscheiden, daß ihre Ausgänge nur dann einen High-Pegel annehmen können, wenn zum Zeitpunkt des Auftretens der entsprechenden Setzimpulse $U_{S1}$, bzw. $U_{S2}$ an den entsprechenden Reset-Eingängen ebenfalls ein High-Pegel ansteht, und daß dieser am Ausgang solange ansteht, wie der High-Pegel an den jeweiligen Reset-Eingängen andauert.

Mit dem Ausgangssignal $U_{A1}$ gemäß Figur 21 des ersten AND-Gatters $A_1$ wird für die Dauer $T_{C1}$ seines High-Pegels der zweite Schalter $S_2$ ab dem Beginn der ersten Schaltflanke $X_1$ des ersten Steuersignals $U_1$ geschlossen, während der dritte Schalter $S_3$ noch geöffnet bleibt. Dadurch lädt sich der zweite Kondensator $C_{TR}$ mit der ansteigenden Flanke $C_1$ auf. Die Referenzspannung $U_{Ref2}$ liegt fast auf Nullpotential, so daß am Ausgang des zweiten Komparators $K_2$ das Signal $U_{R1}$ mit einem High-Pegel gemäß Figur 2g ansteht.

Dieses Signal wird auch dem Rücksetzeingang der ersten bistabilen Kippstufe $FF_1$ zugeführt, deren Ausgangssignal $U_2$ mit dem zeitlichen Auftreten des Setzimpulses $U_{S1}$ einen High-Pegel annimmt und dadurch die erste Steuerflanke $X_2$ des zweiten Steuersignals $U_2$ bildet, der bis zum Ende des High-Pegels des Ausgangssignals $U_{R1}$ der zweiten Komparatorstufe $K_2$ anhält gemäß Figuren 2e - 2h. Dadurch wird die zweite Steuerflanke $Y_2$ des zweiten Steuersignals $U_2$ gebildet.

Am Ausgang der zweiten bistabilen Kippstufe $FF_2$ wird das Signal $U_{FF2}$ gemäß Figur 2j erzeugt, welches mit Beginn der zweiten Schaltflanke $Y_1$ des ersten Steuersignals $U_1$ einen High-Pegel aufweist, der für die Dauer $\Delta T$ ansteht, bis $U_2$ gemäß Figur 2k auf Low-Pegel gezogen wird.

Mit der High-Low Flanke des Signals $U_{A1}$ wird der zweite Schalter $S_2$ wieder geöffnet, und die momentane Spannung

$U_C$ am Kondensator $C_{TR}$ wird für die Dauer $\Delta T$ gemäß Figur 2f solange gespeichert, bis die High-Phase des Signals $U_{NOR2}$ gemäß Figur 2n beginnt. Dann wird der dritte Schalter $S_3$ geschlossen und der Kondensator $C_{TR}$ wird mit dem Entladestrom $I_{E2}$ entladen, so daß sich ein linearer Spannungsabfall der Kondensatorspannung $U_C$ mit der abfallenden Flanke $C_2$ gemäß Figur 2f ergibt. Wählt man die beiden Ströme $I_{L2}$ und $I_{E2}$ gleich groß, sind die Steilheiten von ansteigender Flanke $C_1$ und abfallender Flanke $C_2$ des Signals C gleich groß. Erreicht die abfallende Flanke $C_2$ die zweite Referenzspannung $U_{Ref2}$, wird mit dem Schnittpunkt bzw. Endpunkt $C_3$ das Ausgangssignal $U_{R1}$ der zweiten Komparatorstufe Null, wodurch $U_2$ auf Low-Pegel gezogen wird. Die Spannung $U_C$ ist mit einer Ladezeit $\Delta T_L$ fest gekoppelt nach der Beziehung:

$$\Delta T_L = \frac{U_C \cdot C_{TR}}{I_{L1}} \quad .$$

Mit dem Signal $U_2$ wird die Endstufe 4 angesteuert und der Primärstrom der Zündspule hat den in Figur 2o dargestellten Verlauf. Mit der ersten Schaltflanke $X_2$ des zweiten Steuersignals $U_2$ wird der Zündvorgang eingeleitet und mit der zweiten Schaltflanke $Y_2$ dieses Signals erfolgt der Aufladevorgang der Primärinduktivität der Zündspule.

Betrachtet man nur die Endpunkte $B_3$ bzw. $C_3$ von sägezahnförmigem Signal B bzw. trapezförmigem Signal C, so ergibt sich, daß mit dem Endpunkt $B_3$ der Zündvorgang und mit Endpunkt $C_3$ der Aufladevorgang eingeleitet wird.

Im Beispiel der Figuren 2a bis 2o wurde ein erster Fall angenommen, wo die Summe der prozentualen Anteile von Schließzeit $T_{Schließ}$ der Zündspule und Zündflankenverzögerung $T_{ZFV}$ größer 100 % sind, bezogen auf die Periodendauer T. Bei einem Viertakter Vierzylindermotor entsprechen 180° Kurbenwellenumdrehung der Periodendauer T. Für einen solchen Fall stellt die Schaltung gemäß Figur 1 eine mögliche Realisierung dar.
In diesem Fall gilt die Beziehung:

$$T_{schließ} \text{ (\% von T)} + T_{ZFV} \text{ (\% von T)} \gtreqless 100 \% \qquad (I)$$

Für viele Anwendungen muß die Bedingung (I) nicht vollständig erfüllt werden, so daß eine vereinfachte Schaltungsmodifikation zum Tragen kommen kann, die die folgende Bedingung erfüllt:

$$T_{schließ} \text{ (\% von T)} + T_{ZFV} \text{ (\% von T)} \lesseqgtr 100 \% \qquad (II)$$

Für viele Anwendungen ist dieser zweite Fall von größerer Bedeutung als der zuerst beschriebene allgemeinere Fall.
Zur Realisierung des zweiten Falls genügt es, auf Schaltungsteile in der Logikschaltung 3 der Figur 1 zu verzichten.
Eine mögliche vereinfachte Schaltung dafür zeigt Figur 3. Das Differenzierglied D und die zweite bistabile Kippstufe $FF_2$ sind dann nicht mehr nötig.
Der bisher von $U_{FF2}$ angesteuerte Eingang des zweiten NOR-Gatters $NOR_2$ wird dabei auf Massepotential gelegt.
In diesem Fall ist dann $U_{FF2}$ konstant Null.

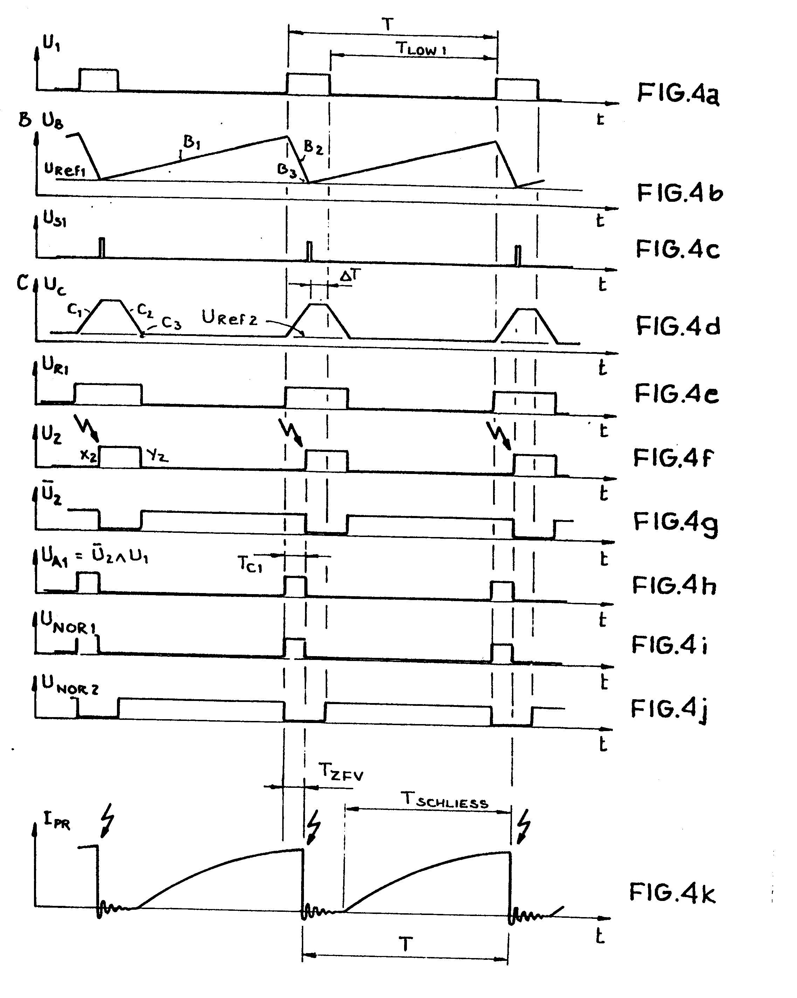

Das Zusammenwirken der einzelnen Funktionsblöcke dieser Schaltung wird anhand der Figuren 3 und 4a - 4k gezeigt.

Die Figur 4a zeigt den zeitlichen Verlauf des ersten Steuersignals $U_1$. Das sägezahnförmige Signal B in Figur 4b unterscheidet sich von dem in Figur 2d gezeigten entsprechenden Signal durch das Maß der Steilheit der abfallenden Flanke $B_2$, welche signifikant größer ist. Dadurch wird <u>innerhalb</u> der Zeit der High-Phase des ersten Steuersignals $U_1$ das Ausgangssignal $U_{S1}$ der ersten Komparatorstufe $K_1$ gemäß Figur 4c erzeugt. Somit ergibt sich für die Summe aus Schließzeit $T_{Schließ}$ und Zündflankenverzögerungszeit $T_{ZFV}$ ein Wert, der kleiner 100 % der Periodendauer T beträgt.

Die Zeit $T_{C1}$, während der der Schalter $S_2$ zur Erzeugung der ansteigenden Flanke $C_1$ des trapezförmigen Signals C geschlossen ist, ergibt sich aus der High-Phase des Signals $U_{A1}$ gemäß Figur 4h.

Mit der High-Phase des Signals $U_{NOR1}$ der Figur 4i des ersten NOR-Gatters $NOR_1$ wird der erste Schalter $S_1$ in Stellung "b" gebracht.
Nach Ablauf der High-Phase des Signals $U_{A1}$ wird der Schalter $S_2$ geöffnet, und für die Dauer der High-Phase des Signals $U_{NOR2}$ gemäß Figur 4j des zweiten NOR-Gatters $NOR_2$ wird der Schalter $S_3$ zur Erzeugung der abfallenden Flanke $C_2$ des trapezförmigen Signals C gemäß Figur 4d geschlossen, aus dem das Signal $U_{R1}$ mittels der zweiten Referenzspannung $U_{Ref2}$ und der zweiten Komparatorstufe $K_2$ gemäß Figur 4e hervorgeht. Das Signal $U_2$ zeigt Figur 4g.

Am Ausgang der ersten bistabilen Kippstufe $FF_1$ steht das zweite Steuersignal $U_2$ an, gemäß Figur 4f. Die Ansteuerung der Primärinduktivität $L_{PR}$ der Zündspule 5 wird über die Endstufe 4 vorgenommen, und den zeitlichen Verlauf des Primärstromes $I_{PR}$ zeigt Figur 4k.

Mit der Schaltung der Figur 3 lassen sich auch Zündflankenverzögerungswerte $T_{ZFV}$ einstellen, deren prozentualer Anteil größer ist als der Anteil der High-Phase des
ersten Steuersignals $U_1$. Das trapezförmige Signal C
geht dann in ein dreieckförmiges Signal über, so daß
dadurch im Zusammenwirken mit den Gattern der Logikschaltung 3 die High-Phase des zweiten Steuersignals $U_2$
kürzer wird als die entsprechende des ersten Steuersignals $U_1$. Das hat für die beiden Schaltflanken des zweiten Steuersignals $U_2$ zur Folge, daß der Zündzeitpunkt
wie beabsichtigt gesteuert verzögert wird, die Schließzeit für den Primärstromfluß in der Zündspule aber tendenziell vergrößert wird, was zu einer unerwünschten
Erhöhung der Verlustleistung in der Endstufe 4 führen
kann. Eine synchrone Phasenverschiebung der Schaltflanken des ersten Steuersignals $U_1$ findet dann nicht mehr
statt.

Die Eingangsschließwinkelinformation wird unverfälscht
durch die Schaltung der Figur 3 auf $U_2$ übertragen bis
zu einem Arbeitspunkt, wo die Beziehung gilt:

$$T_{Schließ} \text{ (\% von T)} + T_{ZFV} \text{ (\% von T)} = 100 \text{ \%}$$

z.B.

$$T_{Schließ} = 85 \text{ \%}; \quad T_{ZFV} = 15 \text{ \%}.$$

Erhöht man die der Schließzeit entsprechende Low-Phase
$T_{LOW1}$ des Steuersignals $U_1$ z.B. auf 90 % und läßt $T_{ZFV} = $
15 %, so führt dies dazu, daß diese Low-Phase

$$\text{mit } T_{LOW1} + (T_{ZFV} - (100 - T_{LOW1})) = 95 \text{ \%} = T_{Schließ} \text{ (\% von T)}$$

übertragen wird.

Eine unverfälschte Schließwinkelübertragung auch für den Fall

$$T_{Schließ} + T_{ZFV} > 100 \%$$

ermöglicht demgegenüber die Schaltung der Figur 1.

Das Signal der Figur 2c ist gleich dem in Figur 4a. Für den Wert $T_{ZFV}$ der Zündflankenverzögerung wurde in Figur 2o im Vergleich zu Figur 4k ein höherer Wert angenommen. Hier gilt

$$T_{Schließ} \ (\% \ von \ T) \ + \ T_{ZFV} \ (\% \ von \ T) \ > \ 100 \ \%.$$

Wird das Steuersignal $U_1$ von einer Kennfeldzündung geliefert - welche heute üblicherweise eine Schließwinkelsteuerung aufweist - bei der also die Höhe des in der Zündspule erreichten Primärstromes $I_{PR}$ direkt über "Auslesen" eines Kennfeldes gesteuert wird, kann diese die Zündenergie betreffende "Eingangsschließwinkelinformation" mit der Schaltung der Figur 1 weitergegeben werden, auch wenn eine zusätzliche Zündzeitpunktverzögerung im nachgeschalteten erfindungsgemäßen Zündsystem beabsichtigt wird. Dies kann erforderlich werden, bei Nachrüstsätzen für elektronische Zündsysteme zur Schadstoffreduzierung bei Ottomotoren, da insbesondere Stickoxidemissionen von der Zündzeitpunktverzögerung abhängen. Ein System-Blockschaltbild hierfür zeigt Figur 13.

Der zeitliche Verlauf des Aufladevorgangs einer Zündspule kann durch folgende Gleichung näherungsweise beschrieben werden:

$$I_{PR} = \frac{U_{Batt} - U_{CE}}{R_{PR}} \cdot (1 - \exp(\frac{t}{L_{PR}/R_{PR}})) \qquad (1)$$

Dabei bedeuten:

- $I_{PR}$ : Primärstrom
- $U_{Batt}$ : Batteriespannung
- $U_{CE}$ : Kollektor-Emitter Restspannung des Endstufentransistors $T_Z$
- $R_{PR}$ : Primärwiderstand
- $L_{PR}$ : Primärinduktivität
- $t$ : Ladezeit

Die Zündenergie, die die Primärspule speichert, errechnet sich nach der Beziehung:

$$E = 1/2 \, L_{PR} \cdot I_{PR}^2 \qquad (2)$$

Gibt man einen bestimmten maximalen Primärstrom, auf
den die Zündspule aufgeladen werden soll vor, ist entsprechend Sorge dafür zu tragen, daß die Zündspule eine
gewisse Zeit vor dem Zündzeitpunkt aufgeladen wird.

Figur 5 zeigt ein Blockschaltbild eines Zündsystems,
das alle Komponenten der bisherigen Schaltung der Figuren 1 oder 3 aufweisen kann, wobei lediglich die Endstufe 4 durch einen Schließzeit-Regelkreis 7 ersetzt
ist. In diesem Regelkreis wird der Zeitpunkt der Zündspulenaufladung über eine Regelschleife bestimmt, so
daß im Augenblick der Zündungseinleitung genau die definierte benötigte Zündenergie bzw. Primärspulenstrom
zur Verfügung steht.

Durch den Einsatz eines solchen Schließzeit-Regelkreises 7 ist man relativ frei von der zeitlichen Lage der
zweiten Schaltflanke $Y_2$ des zweiten Steuersignals $U_2$.
Ein Schließzeit-Regelsystem der beschriebenen Art ist
beispielsweise aus der DE-PS 30 15 939 bekannt.

- 19 -

0209781

Die Figuren 6a - 6d zeigen die wesentlichen Signalverläufe bei einem Zündsystem der Figur 5.

Das zweite Steuersignal $U_2$ gemäß Figur 6a erzeugt am Kollektor des Leistungstransistors $T_Z$ ein Signal $U_3$ gemäß Figur 6d.

Mit seiner Low-High Flanke $X_3$, die nahezu gleichzeitig mit der ersten Schaltflanke $X_2$ des zweiten Steuersignals $U_2$ gebildet wird, wird die Zündung eingeleitet.

Die High-Low Flanke $Y_3$ des Signals $U_3$ ist unabhängig von der zweiten Schaltflanke $Y_2$ des zweiten Steuersignals $U_2$.

Den zugehörigen Verlauf des Primärstromes $I_{PR}$ der Zündspule 5 zeigt die Figur 6c. Figur 6b zeigt ein digitales Signal $U_4$, das die gleiche Phasenlage wie das Signal $U_3$ aufweist und in der Regel Diganosezwecken dient.

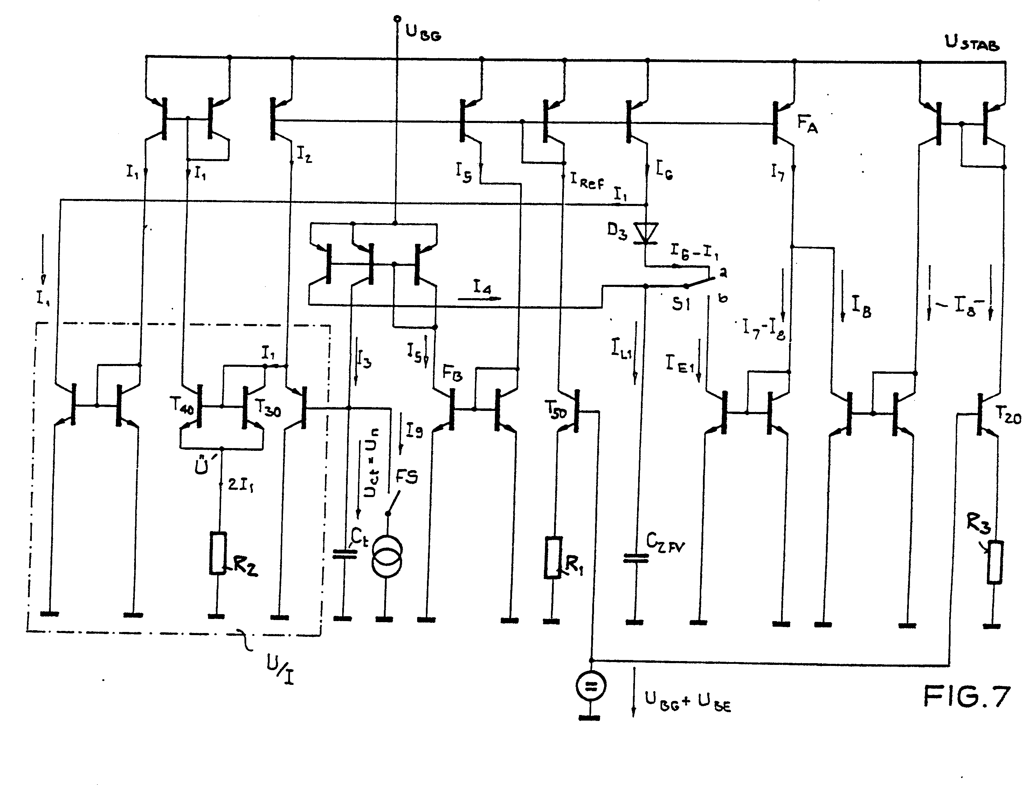

Figur 7 zeigt ein Detailschaltbild zur Realisierung des sägezahnförmigen Signals B mit der ansteigenden Flanke $B_1$ und der abfallenden Flanke $B_2$.

Das sägezahnförmige Signal B wird durch Laden und Entladen des ersten Kondensator $C_{ZFV}$ mittels der Ströme $I_{L1}$ bzw. $I_{E1}$ erzeugt. Der Wert der Zündflankenverzögerung ZFV in % der Periode T ist direkt proportional dem Stromverhältnis $I_{L1}/I_{E1}$.

$$100 \cdot (I_{L1}/I_{E1}) = (T_{ZFV}/T) \cdot 100 = ZFV \text{ (\% von T)}$$

Durch eine mittelbare Steuerung dieses Verhältnisses als Funktion von z.B. der Motordrehzahl, der Zeit bzw. der motorspezifischen Daten, wie Temperatur, Last usw. kann eine Zündzeitpunktverstellung in weiten Maßen erfolgen.

Die Schaltung der Figur 7 liefert temperaturkompensierte Ströme und hängt ansonsten nur von Stromspiegelver-

hältnissen ab, was zu einer sehr integrationsgeeigneten Schaltung führt.
Der Umschalter S1 entspricht dem der Figur 1; ebenso der Kondensator $C_{ZFV}$.

Mit dem Transistor T10 und dem Widerstand R1 und der Spannung $U_{BG}$ wird der Strom $I_{Ref} = U_{BG}/R_1$ eingestellt. Die Ströme $I_2$; $I_3$; $I_4$; $I_5$; $I_6$; $I_7$ und $I_9$ sind über feste Stromspiegelverhältnisse mit $I_{Ref}$ gekoppelt. Der Strom $I_8$ wird ähnlich $I_{Ref}$ mit Hilfe von $R_3$ erzeugt. Die Spannung an dem Kondensator $C_t$ erscheint auch am Punkt Ü und bestimmt mit $R_2$ zusammen den Strom $I_1$. Die Spannung $U_{Ct}$ am Kondensator $C_t$ wird durch einen Spannungs-Strom Wandler U/I in den Strom $I_1$ umgesetzt, der vom Strom $I_6$ substrahiert wird. Stimmt man das Verhältnis $U_{BG}/R_1$ bzw. $U_{BG}/R_3$ im Temperaturkoeffizient $T_K$ aufeinander ab, so entstehen temperaturkompensierte Ströme. Der Ladestrom des Kondensators $C_{ZFV}$ setzt sich zusammen aus der Summe der Ströme $(I_6 - I_1) + I_4$.

Die Zündzeitpunktverzögerung ist gegeben durch

$$100 \cdot \frac{T_{ZFV}}{T} = \frac{I_6 - I_1 + I_4}{I_7 - I_8} \times 100 = \frac{I_{L1}}{I_{E1}} \cdot 100 = ZFV \ (\% \ von \ T)$$

wobei die Differenz aus $I_7 - I_8$ den ersten Entladestrom $I_{E1}$ bildet. Da der erste Kondensator $C_{ZFV}$ auf einer kleinen Spannung von $U_{Ref1}$ liegt, Figur 2d, Figur 4b, ist es angebracht, einen Mindestladestrom $I_4$ immer fließen zu lassen, um bei anliegender Spannung $U_{STAB}$ in Figur 7 eine Entladung des $C_{ZFV} < U_{Ref1}$ zu verhindern. Eine solche Entladung hätte zur Folge, daß eine erwünschte Zündflankenverzögerung erst <u>nach</u> Stabilisierung des Arbeitspunktes am Kondensator $C_{ZFV}$ erfolgen würde.

Der Strom $I_4$ braucht nur einige 100 nA groß zu sein. Er hat damit keinen nachteiligen Einfluß auf die Verzögerungswerte von $T_{ZFV}/T$. Der maximale Wert der Zündflankenverzögerung $T_{ZFV}/T$ wird erreicht für $I_1 = 0$ und vorgegebenem $I_8$ (durch $R_3$ eingestellt).
Durch "Schließen" des Schalters FS wird eine Entladung von $C_t$ erreicht was zum maximalen Wert von $T_{ZFV}/T$ führt.
Die Spannung an $C_t$ veläuft
dann nach Figur 8a. Für die Flanke $f_1$ gilt:

$$U_{Ct} = - \frac{I_3 \cdot t_{ü}}{C_t} .$$

Im folgenden wird der Quotient $\frac{T_{ZFV}}{T} \cdot 100$ mit A bezeichnet.

Mit $t_{ü}$ ist die Übergangszeit bezeichnet, die zum Durchlaufen von der minimalen Zündflankenverzögerungszeit 0 % von T bis zum Erreichen des maximalen Wertes von

$$\frac{I_6 - I_4}{I_7 - I_8} \times 100 = A_{max} \text{ (% von T)}$$

benötigt wird - Figur 8b.

Durch die Emitterflächenverhältnisse $F_A$, $F_B$ in Figur 7 soll angedeutet werden, daß der Strom $I_7$ z.B. $F_A$ mal so groß wie $I_{Ref}$ gewählt wurde. Der Strom $I_3$ hat den Wert von $I_5/F_B$.

Auf diese Art wurde eine feste Zuordnung des zeitlichen Verlaufs der Spannung am Kondensator $C_t$ mit dem zeitlichen Verlauf des Wertes A für die Zündflankenverzögerung erreicht. Des weiteren werden abrupte Änderungen im A-Wert vermieden, da die Änderungen über die Zeit $t_{ü}$ - die durch Wahl von $I_3$ und $C_t$ vorwählbar ist - ablau-

fen müssen. Wird z.B. während der Entladung von $C_t$ der Schalter FS auf "Öffnen" gesteuert, ergeben sich die in Figur 8a/b und Figur 12 gestrichelt gezeichneten Verläufe. Das heißt, die Spannung an $C_t$ nimmt wieder zu mit der Steilheit, die durch das Verhältnis $U_{Ct}/t_{ü}$ = $I_3/C_t$ = konst. gegeben ist. Diese Änderung wird auf den Wert der Zündflankenverzögerung A entsprechend übertragen. Diese "Retriggerbarkeit" ist für jeden Spannungswert an $C_t$ und jederzeit gegeben. Die maximale Spannung an $C_t$ ist näherungsweise gegeben durch die Spannung $U_{BG}$. Diese Spannung kann als maximale Spannung am Punkt Ü der Figur 7 erscheinen.

Wählt man nun $2I_1$ = $U_{BG}/R_2$ und verwendet man $I_{Ref}$ = $U_{BG}/ R_1$ und wählt man $I_{Ref}$ = $I_6$ - etwa durch einen Stromspiegel 1:1 - so folgt $I_1$ = $I_6$, wenn $2R_2$ = $R_1$. Mit dieser Forderung wird sichergestellt - auch für Streuungen von $U_{BG}$ über Charge und Temperatur - daß $I_1$ = $I_6$ werden kann und damit - wie bereits erwähnt - der minimale A-Wert immer realisierbar bleibt. Für z.B. $I_4$ = 100 nA und $I_7$ - $I_8$ = 100 µA

$$A_{min} = \frac{100 \text{ nA}}{100 \text{ µA}} \times 100 = 0,1 \text{ \%.}$$

Dieser Wert ist so gering, daß er in der Praxis keine Rolle spielt und vernachlässigt werden kann.

Mit dem Stromspiegel $I_7/I_{Ref}$ und dem Wert $I_8$, eingestellt durch $R_3$, wird der maximale Wert A eingestellt. Wünscht man nur <u>einen</u> festen Maximalwert, so kann $I_8$, $T_{20}$, $R_3$ entfallen und man stellt $I_7/I_{Ref}$ nur durch ein Stromspiegelverhältnis ein. Für z.B. $I_7/I_{Ref}$ = 10 folgt ein maximaler A-Wert

$$\frac{I_{Ref} + I_4}{10 \ I_{Ref}} \cdot 100 = A_{max} \text{ (\%)}$$

wenn wieder $I_6/I_{ref}$ = 1 gewählt wurde. Für $I_{Ref} \gg I_4$ ergibt sich ein $A_{max}$-Wert von $A_{max}$ = 10 %. Für einen Vierzylindermotor bedeutet dies eine Spätverstellung von 18° der Kurbelwellenumdrehung.

Will man jedoch den $A_{max}$-Wert kontinuierlich beeinflussen können, so bietet sich die Steuerung von $I_8$ in Figur 7 an. Dies kann z.B. für unterschiedliche $A_{max}$-Werte über Lasertrimming von $R_3$ erfolgen.
Auch eine dynamische Steuerung des Kollektorstromes von $T_{20}$ als Funktion motorspezifischer Daten ist möglich, wodurch die Steilheit der abfallenden Flanke $B_2$ des sägezahnförmigen Signals B beeinflußt wird.

Zur Einleitung einer Spannungsänderung $\Delta U_{Ct}$ und damit zur Änderung der Zündflankenverzögerung ZFV um einen entsprechenden Wert $\Delta A$, bedarf es der Steuerung des Schalters FS in Figur 7.
Eine mögliche Realisierung des Schalters FS sowie der Stromquellen $I_3$ und $I_9$ ist in Figur 9 dargestellt. Hier wird der Strom des Einströmers $I_3$ der Einströmerbank $T_4$-$T_5$-$T_6$ zugeführt, dergestalt, daß die Kollektorströme von $T_5$ und $T_6$ ebenfalls den Strom $I_3$ abgeben. Für diesen Fall sei der Steuerschalter $S_{St}$ auf "a" angenommen. Wird der Transistor $T_1$ leitend geschaltet durch ein High-Potential an $S_1$, so fließt der Strom $I_3$ aus T6 über T1 nach Masse. Dadurch fließt durch den Stromspiegel T2 - T3 kein Strom. Somit kann die Spannung an $C_t$ anwachsen, da der Strom aus T5 den Kondensator $C_t$ auflädt. Man erhält einen Spannungsverlauf gemäß der Flanke $f_2$ in Figur 8a.

Wird der Transistor T1 nichtleitend geschaltet durch Anlegen von Massepotential an die Klemme S1 in Figur 9, so fließt $I_3$ aus T6 in den Transistor T2 des Stromspiegels T2 - T3. Da T3 in diesem Fall den doppelten Kollektorstrom führt - eingestellt durch das Flächenverhältnis FT3/FT2 = 2,0 - wird der Kondensator $C_t$ effektiv mit 2 x $I_3$ - $I_3$ = $I_3$ entladen. Es ergibt sich ein
Kurvenverlauf gemäß der Flanke $f_1$ in Figur 8a.

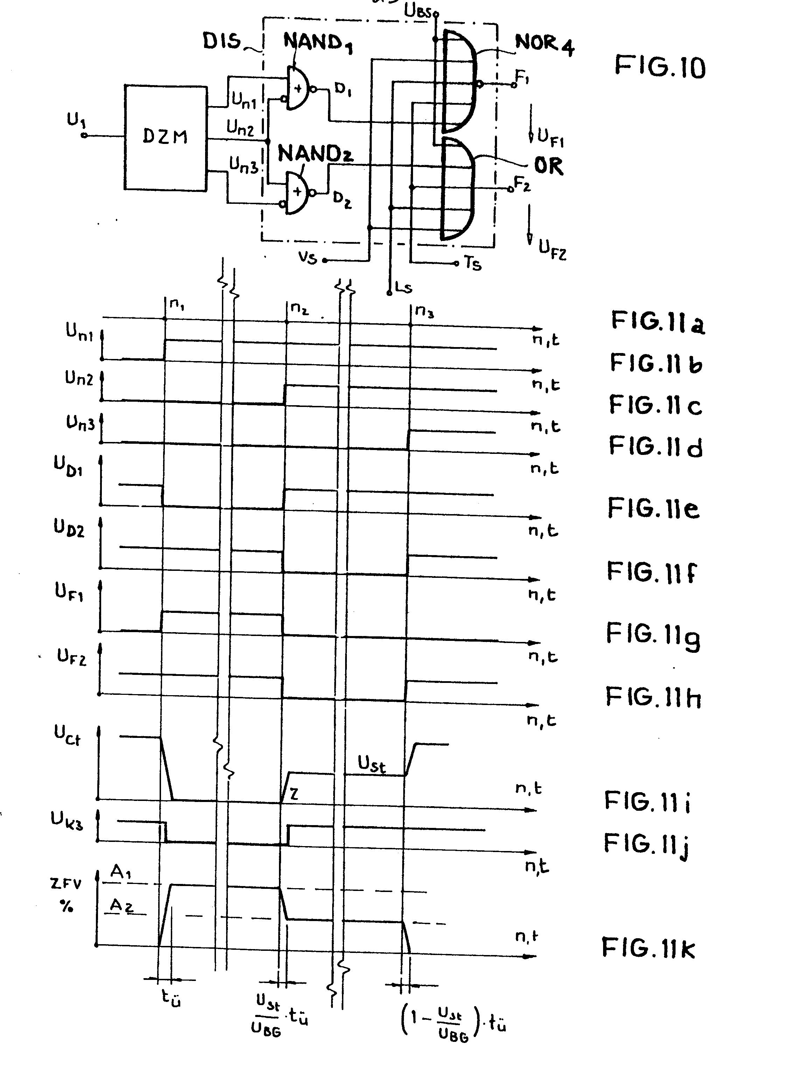

Mit einem derartigen Konzept können also durch High-
bzw. Low-Potential an der Klemme S1 Zündflankenverzögerungswerte von 0 % bis $A_{max}$% gemäß Figur 8b ausgelöst
werden. Mit Hilfe der in Figur 9 dargestellten weiteren
Schaltungsteilen - $K_3$, $U_{St}$, $A_2$, $NOR_3$ - kann man eine
drehzahlabhängig gesteuerte Kennlinie gemäß Figur 11k
erzielen, wenn man den einen Eingang $F_1$ des NOR-Gatters
$NOR_3$ bzw. den einen Eingang $F_2$ des AND-Gatters $F_2$ über
einen Drehzahldiskriminator DIS ansteuert.

In Figur 10 ist eine Prinzipschaltung, die die entsprechenden Signale F1 und F2 liefert angegeben. Ein Drehzahlmesser DZM, an dessen Eingang das Steuersignal $U_1$
von Figur 2c, 4a anliegt, erfaßt die Drehzahl (n) und
liefert an seinen Ausgängen $n_1$ - $n_2$ - $n_3$ dann ein High-
Signal, wenn bestimmte Drehzahlen $n_1$ bzw. $n_2$ bzw. $n_3$
überschritten werden. Dies kann ein Drehzahlmesser sein,
der durch Integration einer geeigneten Monoflopzeit realisiert ist oder auch ein digitales System, welches
durch Auszählen der Periodenzeit die Drehzahl erfaßt.
Die Ausgänge $n_1$ bis $n_3$ liefern die Spannungen gemäß Figur 11b - 11d. Die Spannungen $Un_1$ und $Un_2$ bzw. $Un_2$ und
$Un_3$ werden über die Logikglieder $NAND_1$ und $NAND_2$ in
Figur 10 zu den Signalen D1 bzw. D2 verarbeitet, deren
Signalverläufe die Figuren 11e und 11f zeigen.

An den Ausgängen der nachgeschalteten Gatter OR bzw.
$NOR_4$ in Figur 10 liegen die Freigabeimpulse F1 und F2
an. Weitere Eingänge dieser beiden Gatter dienen der
weiteren Beeinflussung der Freigabeimpulse F1 bzw. F2.
Vorerst sollen alle zusätzlichen Eingänge auf "Low" liegen. Dann ergeben sich $U_{F1}$- bzw. $U_{F2}$-Verläufe gemäß Figur 11 g/h.

Für $n < n1$ ist $U_{F1}$ auf Low-Potential und $U_{F2}$ auf High-Potential. Der Kondensator $C_t$ in Figur 9 liegt auf der Spannung $U_{BG}$ gemäß Figur 11i. Für $U_{Ct} > U_{St}$ liegt der Ausgang $U_{K3}$ des Komparators $K_3$ in Figur 9 ebenfalls auf High-Potential gemäß Figur 11j. Für diese Konstellation liegt der Schalter $S_{St}$ auf "a".
S1 liegt auf High, wodurch T1 leitend wird und der Kondensator $C_t$ weiter auf seiner maximalen Spannung $U_{Ct} = U_{BG}$ gehalten wird. Dementsprechend wird gemäß Figur 11k keine Zündflankenverzögerung freigegeben.

Für $\geq n_1$ geht $U_{F1}$ von Low- auf High-Potential über und $S_1$ von High- auf Low-Potential was dazu führt, daß $T_1$ sperrt - Figur 11g. Diese Flanke löst einen Übergang der Spannung $U_{Ct}$ von $U_{BG}$ gegen 0 V aus, welcher nach der Zeit $t_ü$ durchlaufen wird. Figur 11i. Dementsprechend läuft die Zündflankenverzögerung ZFV gemäß Figur 11k von 0 % auf den Wert $A_1$ %.
Für $U_{Ct} \leq U_{St}$ kippt der Komparatorausgang $U_{K3}$ von High- auf Low-Potential. Dieser Flankenwechsel wirkt sich jedoch nicht auf den Eingang S1 in Figur 8 aus. Der Schalter $S_{St}$ liegt weiterhin auf "a".
Für $n_1 < n < n_2$ liefert das System eine Spätverstellung von $A_1$ % von T.

Für $n \geq n_2$ geht $U_{F1}$ von High- auf Low-Potential und $U_{F2}$ von High- auf Low-Potential. $U_{K3}$ verharrt zunächst auf Low-Potential.
Der Flankenwechsel an F1 in Figur 9 gibt die Ladung des Kondensators $C_t$ frei, wodurch $U_{Ct}$ ansteigt gemäß der Flanke z in Figur 11i. Nach der Zeit $(U_{St}/U_{BG}) \cdot t_ü$ ist $U_{Ct} = U_{St}$. Mit dem Flankenwechsel von F2 in Figur 9 wird der Schalter $S_{St}$ auf "b" umgeschaltet. Dadurch erscheint die Spannung $U_{St}$ an den Emittern der Transistoren T2 - T3.

Erreicht $U_{Ct}$ den Wert $U_{St}$ so springt $U_{K3}$ von Low- auf High-Potential. Dieser Flankenwechsel zieht den S1-Eingang nach Low-Potential, wodurch der Stromspiegel T2 - T3 auf Entladen programmiert wird. Da aber die Emitter von T2 und T3 auf dem Potential $U_{St}$ liegen, kann der Kondensator $C_t$ nicht unter den Wert von $U_{St}$ entladen werden. In dem angegebenen Prinzipschaltbild von Figur 9 wird sich der Kondensator $C_t$ über $I_3$ noch um die $U_{CESAT}$-Spannung von T3 weiter aufladen. Eine weitere Aufladung von $C_t$ ist nicht möglich, da ansonsten über T3 der Kondensator $C_t$ wieder entladen wird. Eine Entladung von $C_t$ unter den Wert $U_{St} + U_{CESAT}$ ist nicht möglich wegen des Potentials $U_{St}$ am Emitter von T2 - T3.

Das heißt, eine Regel- und Klemmschaltung nach dem Prinzip der Figur 9 sorgt dafür, daß der von $U_{St}$ vorgewählte Spannungswert als Klemmwert an $C_t$ erscheint. Der $U_{CESAT}$-Wert von T3 braucht in der Praxis nur einige 10 mV auszumachen. Andererseits wird - wie bereits beschrieben - jeder Spannungswert an $C_t$ in einem festzugeordneten Verhältnis in einen A-Wert für die Zündflankenverzögerung ZFV umgesetzt.

Für $n_2 < n < n_3$ liegt $U_{Ct}$ auf dem Wert $U_{St}$ und damit ergibt sich ein Wert der Zündflankenverzögerung ZFV von $A_2$ % von T gemäß Figur 11i und 11k.

In dem gewählten Beispiel bleibt die Übergangssteilheit für die Änderung $\Delta ZFV / \Delta t$ erhalten, da die Steilheit für Auf- bzw. Entladung von $C_t$ mit $\Delta U_{Ct} / \Delta t = I_{L/E} / C_t$ ebenfalls konstant gewählt wurde.

Für $n \geq n_3$ ändert sich nur noch $U_{F2}$ von Low- auf High-Potential. $U_{F1}$ bleibt auf Low-Potential; $U_{K3}$ bleibt auf High-Potential gemäß Figur 11g, h, j. Der Wechsel von $U_{F2}$ bewirkt, daß der Schalter $S_{St}$ wieder auf "a" umgelegt wird und damit an den Emittern T2 und T3 wieder Massepotential anliegt.

Weiterhin wird mit dem $U_{F2}$-Wechsel der Eingang S1 auf High-Potential gesteuert, wodurch ein Aufladen von $C_t$ über den Wert $U_{St}$ hinaus ausgelöst wird. Nach der Zeit $(1 - U_{St}/U_{BG}) \cdot t_{ü}$ liegt die Spannung an $C_t$ wieder auf dem Max.-Wert $U_{Ct} = U_{BG}$, was gleichbedeutend ist mit A = 0 % von T.

Damit ist die Kennlinie nach Figur 11k beschrieben für den Fall von kleinen Drehzahlen kommend zu hohen Drehzahlen gehend (Beschleunigung). Wie man sich leicht überzeugt, wird dieselbe Kennlinie durchlaufen für den umgekehrten Fall, wenn man von hohen zu kleinen Drehzahlen (Abbremsen) wechselt. Wie weiter oben erwähnt wurde, besitzen das OR- bzw. das $NOR_4$-Gatter der Figur 10 weitere Eingänge. Diese Eingänge können z.B. von motorspezifischen Schaltern wie Vollastschalter VS, Leerlaufschalter LS, Temperaturschalter TS, Batterieschwellenschalter $U_{BS}$ usw. angesteuert werden.

So führt z.B. ein High-Potential am VS bzw. LS bzw. TS bzw. $U_{BS}$ in Figur 10 zu einem Übergang in Figur 11k von A % gegen 0 % unabhängig von der Drehzahl und dem momentanen A-Wert.

Ein High-Potential zwingt $U_{F1}$ auf Low-Potential. Ein High-Potential zwingt $U_{F2}$ auf High-Potential. Damit wird immer der Schalter $S_{St}$ in Figur 8 auf "a" und S1 wird immer auf High-Potential geschaltet. Damit wird immer die Ladung von $C_t$ eingeleitet bis $U_{Ctmax} = U_{BG}$. Dies entspricht einer Zündflankenverzögerung ZFV von 0 %. Ein solcher Eingang kann demgemäß auch als EIN-AUSSchalter für das Zündflankenverzögerungs-System eingesetzt werden.

Wechseln die High-Potentiale an den Steuereingängen von OR und $NOR_4$-Gatter in Figur 10 wieder auf Low-Potential, so läuft das Zündflankenverzögerungs-System wieder auf den momentanen drehzahlabhängigen A-Wert mit der eingestellten Steilheit $\Delta ZFV/\Delta t = I_{L/E}/C_t$. Diese zusätzlichen Steuereingänge sind dann nützlich, wenn eine abgasverbessernde Spätzündung aus anderen Gründen für eine gewisse Zeit wieder in Richtung 0 % Spätzündung übergehen soll. Gründe hierfür können z.B. thermische Probleme am Motor bzw. Leistungseinbußen beim Motorbeschleunigungen und gleichzeitiger Spätverstellung sein.

Figur 12 zeigt ein realisiertes Kennfeld für die Reduktion der Stickoxid-Anteile $NO_x$ im Abgas. Die gestrichelt gezeichneten Verläufe innerhalb der schraffierten Bereiche können durch Steuersignale an den Eingängen VS, LS, TS oder $U_{BS}$ gemäß Figur 13 bzw. Figur 10 in der beschriebenen Weise ausgelöst werden.

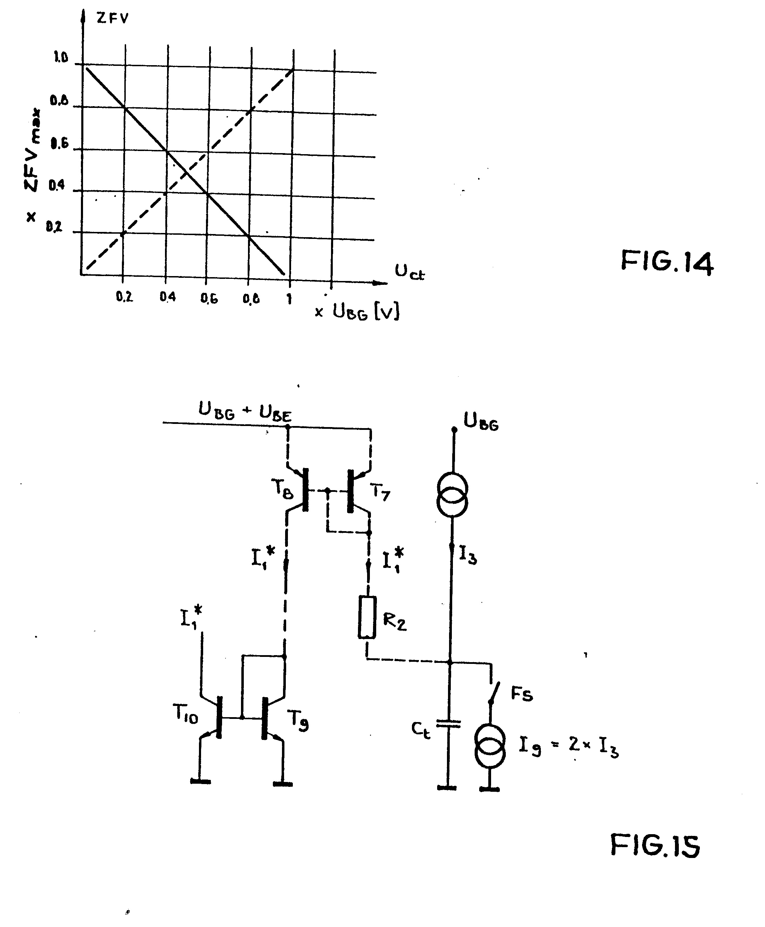

In Figur 14 ist mit der durchgezogenen Linie die $U_{Ct}$-ZFV-Übertragungskurve dargestellt für das oben beschriebene System.

Diverse Abweichungen von dieser Übertragungskurve sind leicht realisierbar. Insbesondere stellt man die Steilheit $\Delta ZFV/\Delta U_{ct}$ ein durch das Flächenverhältnis FT4/FT3 der Transistoren $T_{40}$, $T_{30}$ in Figur 7.
Eine Inversion der Steigung von negativer Steigung zur positiven Steigung erhält man nach Figur 15.

In Figur 15 ist ein Teilausschnitt von Figur 7 wiedergegeben. Änderungen gegenüber Figur 7 sind gestrichelt gezeichnet. Hier liegt der Widerstand R2 zwischen $C_t$ und dem Basis-Kollektor-Anschluß von Transistor T7. T7 mit T8 stellen einen Stromspiegel dar. Der Strom bestimmt sich aus

- 29 -

$$I_1^* = \frac{U_{BG} - U_{Ct}}{R2}$$

d.h. für $U_{Ctmax} = U_{BG}$ folgt $I_1^* = 0$ und für $U_{Ct} = 0$
folgt $I_1^* = U_{BG}/R2$, wegen $I_{Ref} = U_{BG}/R_1$ und mit $I_{Ref} = I_6$ folgt $I_6 = I_1^*$ wenn $R1 = R2$.
Durch diese wenigen Änderungen wird erreicht, daß die
Spannung $U_{Ct} = 0$ V ($\hat{=} I_6 = I_1^*$) einem A-Wert von

$$A_{min} = \frac{I_4}{I_7 - I_8} \cdot 100 = 0 \text{ \% zugeordnet wird und}$$

der Spannung $U_{Ct} = U_{BG}$ ($\hat{=} I_1^* = 0$) ein A-Wert

$$A_{max} = \frac{I_4 + I_6}{I_7 - I_8} \cdot 100 \text{ zugeordnet wird.}$$

Für die $U_{Ct}$-ZFV-Übertragungskurve erhält man den in Figur 14 gestrichelt gezeichneten Verlauf.

Dadurch bietet sich auch die direkte Ausnutzung der Integrationsspannung eines Drehzahlmessers zur Steuerung
der Zündflankenverzögerung an. Für die Spannung am Integratorkondensator $C_i$ in Figur 16 wird ein Verlauf
über der Drehzahl n angenommen, gemäß Figur 17a.

Durch Pegelanpassung dieser $U_{Ci}$-n-Kennlinie - etwa durch
Abschwächung bzw. Verstärkung gemäß Figur 16 kann man
eine Änderung der Steilheit $\Delta U_{Ci}/\Delta n$ in der Figur 17a
erreichen, wie dies in Figur 17b dargestellt ist.

Vorzugsweise nimmt man die Pegelanpassung so vor, daß
für $n > n_o$ $U_{Ci}^* \geq U_{BG}$ ist. Mit $n_o$ ist eine Drehzahl bezeichnet, ab der eine Begrenzung der Zündflankenverzögerung erreicht sein soll. Dies entspricht in Figur 17b der Kurve C. In diesem Fall wird die Spannung $U_{Ci}$* von Figur 17a bzw. Figur 17b direkt zur Steuerung des Stromes $I_1^*$ in Figur 15 eingesetzt. Für diesen Fall entfallen dort die Stromquellen $I_3$ und $I_9$ sowie der Schalter FS und der Kondensator $C_t$. $R_2$ wird nunmehr mit $U_{Ci}$* von Figur 16 verbunden.

In diesem Fall wird die Spätverstellung proportional der Drehzahl n vorgenommen. Für $n > n_o$ bleibt die Spätverstellung auf dem maximalen Wert $A_{max}$ stehen. Figur 17c.

Durch Beeinflussung der Spannung $U_{Ci}$* in Figur 16 bzw. $U_{Ct}$ in Figur 7 können vielerlei Zündzeitpunktverschiebungen mit diesem System realisiert werden, wobei die näher beschriebenen Realisierungsmöglichkeiten nur beispielhaft sein können.

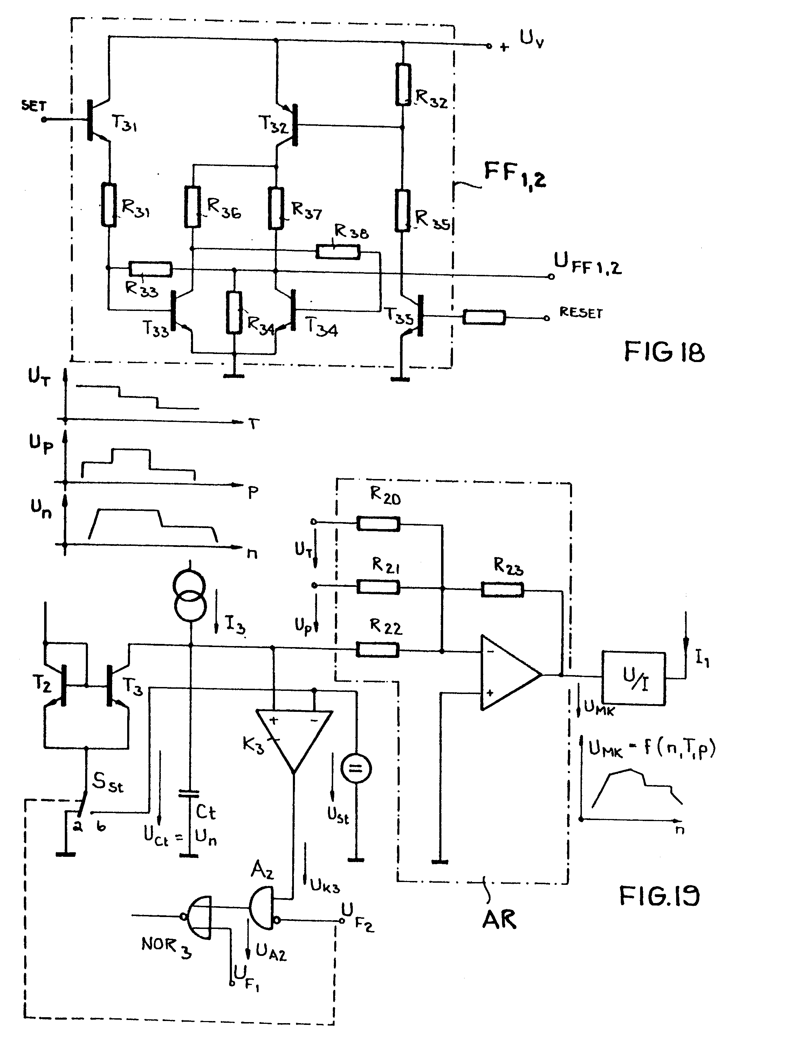

Die Figur 18 zeigt eine mögliche Detailschaltung zur Realisierung der beiden bistabilen Kippstufen $FF_1$ bzw. $FF_2$.

Bei angeschalteter Versorgungsspannung $U_V$ und einem High-Pegel am Reset-Eingang RESET, erfolgt die Ansteuerung des Transistor $T_{34}$ über die Widerstände $R_{36}$ und $R_{38}$ bei durchgeschaltetem Transistor $T_{32}$. Der Transistor $T_{33}$ wird verriegelt, da das Low-Potential am Kollektor $T_{34}$ über $R_{33}$ an die Basis von $T_{33}$ gelangt. Das Ausgangssignal $U_{FF1,2}$ zeigt in diesem Fall Low-Pegel.

Ein Setzen ist nur dann möglich, wenn am RESET-Eingang RESET der High-Pegel anstehen bleibt.

Dann wird über $T_{31}$ und $R_{31}$ der Transistor $T_{33}$ angesteuert, welcher über sein Kollektor-Potential dem Transistor T34 den Ansteuerstrom wegnimmt. Geht nun das Signal am Set-Eingang SET wieder auf Low-Pegel, und bleibt der Pegel am Reset-Eingang auf HIGH, wird der Transi-

stor $T_{33}$ vom Kollektorstrom des Transistors $T_{32}$ über
die Widerstände $R_{37}$ und $R_{33}$ angesteuert, so daß sich
die Schaltung "hält". Das Ausgangssignal $U_{FF1,2}$ bleibt
solange auf High-Pegel, wie der High-Pegel am Reset-Eingang anhält. Der Ableitwiderstand $R_{34}$ gibt der bistabilen Kippstufe eine definierte Vorzugslage z.B. beim
Einschalten der Versorgungsspannung $U_V$.

Mittels der in Figur 19 gezeigten Analog-Rechner Schaltung AR, die aus einem Summierverstärker bestehen kann.
lassen sich der Drehzahlkennlinie $U_n$ weitere motorspezifische Kennlinien, die aus physikalischen Meßgrößen
wie Temperatur T oder Druck p über Sensoren in elektrische Signale $U_T$ bzw. $U_p$ gewandelt werden, überlagern zu
der Multifunktionskennlinie $U_{MK}$, deren Spannungswerte
dem Spannungs-Strom Wandler U/I der Figur 7 zugeführt
werden. Über den proportionalen Strom $I_1$ wird der Ladestrom $I_{L1}$ des sägezahnförmigen Signals B beeinflußt,
was in der Änderung der Steilheit der ansteigenden
Flanke $B_1$ zum Ausdruck kommt. Dementsprechend verändert
sich der Zündzeitpunkt in Form der ersten Flanke $X_2$ des
zweiten Steuersignals $U_2$.

Überlagert man einem Zündungskennfeld gemäß Figur 20a
das in Figur 20b gezeigte Steuerkennfeld , welches insbesondere zur Reduktion von Stickoxid-Anteilen $NO_x$ im
Abgas ausgelegt ist, so ergibt sich durch Subtraktion
ein neues Kennfeld gemäß Figur 20c.

Über die Analog-Rechner Schaltung AR und beispielsweise
die Kennlinien $U_p$ und $U_n$ läßt sich ein analoges Kennfeld aufbauen.

1

Heilbronn, den 20.06.1985
PTL-Se/sl          HN 85/23

Patentansprüche

1) Elektronisches Zündsystem für eine Brennkraftmaschine mit einem von der Kurbelwellenlage abhängigen Eingangssignal ($U_{Ein}$), welches über eine erste Steuer- oder Regeleinrichtung (1) in ein erstes digitales Steuersignal ($U_1$) geformt wird, das mittelbar einer Verzögerungseinrichtung (2) zugeführt wird, die die Schaltflanken ($X_1$, $Y_1$) des ersten Steuersignals ($U_1$) verzögert und daraus ein zweites Steuersignal ($U_2$) bildet, dadurch gekennzeichnet, daß aus der ersten Schaltflanke ($X_1$) des ersten Steuersignals ($U_1$) als Funktion der Betriebsparameter (n, P, T, M, $U_{Batt}$, p) der Brennkraftmaschine ein sägezahnförmiges Signal (B) mit einer ansteigenden ($B_1$) und einer abfallenden Flanke ($B_2$) abgeleitet wird, deren Endpunkt ($B_3$) die erste Schaltflanke ($X_2$) des zweiten Steuersignals ($U_2$) definiert, wobei das Verhältnis der Steilheiten beider Flanken ($B_1$, $B_2$) ein Maß für die Verzögerung der ersten Schaltflanke ($X_2$) des zweiten Steuersignals ($U_2$) gegenüber der ersten Schaltflanke ($X_1$) des ersten Steuersignals ($U_1$) ist, und daß die zweite Schaltflanke ($Y_1$) des ersten Steuersignals ($U_1$), die eine Funktion der elektrischen Parameter ($R_{PR}$, $L_{PR}$, $I_{PR}$, $U_{Batt}$, n, T) ist, durch Bildung eines trapezförmigen Signals (C) mit einer ansteigenden ($C_1$) und einer abfallenden Flanke ($C_2$) verzögert wird, und die ansteigende Flanke ($C_1$) mit der ersten

5) Elektronisches Zündsystem nach einem der vorangehenden Ansprüche, dadurch gekennzeichnet, daß die beiden Flanken ($C_1$, $C_2$) des trapezförmigen Signals (C) durch den Spannungsverlauf an einem zweiten Kondensator ($C_{TR}$) erzeugt werden, der über einen zweiten Ladestrom ($I_{L2}$) über einen von einem ersten AND-Gatter ($A_1$) mittelbar gesteuerten zweiten Schalter ($S_2$) geladen wird, dessen Schließzeit ($T_{C1}$) über die Logikschaltung (3) vorgegeben ist, daß sich dieser Schließzeit das Zeitintervall ($\Delta T$) anschließt, ab dessen Beginn der zweite Schalter ($S_2$) geöffnet wird, wodurch die momentane Spannung am Kondensator ($C_{TR}$) gespeichert bleibt, und daß nach Ablauf des Zeitintervalls ($\Delta T$) der zweite Kondensator ($C_{TR}$) mit einem zum zweiten Ladestrom ($I_{L2}$) gleich großen Entladestrom ($I_{E2}$) über einen dritten Schalter ($S_3$) bis auf Null-Potential entladen wird.

6) Elektronisches Zündsystem nach einem der vorangehenden Ansprüche, dadurch gekennzeichnet, daß dem positiven Eingang einer ersten Komparatorstufe ($K_1$) eine erste Referenzspannung ($U_{Ref1}$) und dem negativen Eingang die Spannung ($U_B$) des sägezahnförmigen Signals (B) zugeführt ist, und daß am Ausgang dieser Komparatorstufe ($K_1$) ein Impuls ($U_{S1}$) abgeleitet wird, mit dem eine erste bistabile Kippstufe ($FF_1$) gesetzt wird und dadurch die erste Schaltflanke ($X_2$) des zweiten Steuersignals ($U_2$) am Ausgang ($Q_1$) der ersten bistabilen Kippstufe ($FF_1$) erzeugt wird.

7) Elektronisches Zündsystem nach einem der vorangehenden Ansprüche, dadurch gekennzeichnet, daß dem positiven Eingang einer zweiten Komparatorstufe ($K_2$) die Spannung ($U_C$) des trapezförmigen Signals (C) zugeführt und dem negativen Eingang dieser zweiten Komparatorstufe ($K_2$) eine zweite Referenzspannung ($U_{Ref2}$) zugeführt

Schaltflanke ($X_1$) des ersten Steuersignals ($U_1$) gestartet wird, daß über eine Logikschaltung (3) ein Zeitintervall ($\Delta T$) ermittelt wird, mit dessen Beginn der weitere Anstieg der Flanke ($C_1$) gestoppt und nach dessen Ablauf die abfallende Flanke ($C_2$) gestartet wird, durch deren Endpunkt ($C_3$) die zweite Schaltflanke ($Y_2$) des zweiten Steuersignals ($U_2$) definiert ist.

2) Elektronisches Zündsystem nach Anspruch 1, dadurch gekennzeichnet, daß die zweite Schaltflanke ($Y_2$) des zweiten Steuersignals ($U_2$) um den gleichen Anteil wie die erste Schaltflanke ($X_2$) des zweiten Steuersignals ($U_2$) gegenüber der ersten Schaltflanke ($X_1$) des ersten Steuersignals ($U_1$) verzögert ist.

3) Elektronisches Zündsystem nach Anspruch 1 oder 2, dadurch gekennzeichnet, daß mit der verzögerten zweiten Schaltflanke ($Y_2$) des zweiten Steuersignals ($U_2$) der Aufladevorgang der Zündspule (5) beginnt und mit der verzögerten Schaltflanke ($X_2$) dieses Signals der Zündvorgang eingeleitet wird durch Ansteuern einer Endstufe (4) mit dem zweiten Steuersignal ($U_2$), mit deren Ausgang ein Anschluß der Primärwicklung ($L_{PR}$) der Zündspule (5) verbunden ist.

4) Elektronisches Zündsystem nach einem der vorangehenden Ansprüche, dadurch gekennzeichnet, daß die beiden Flanken ($B_1$, $B_2$) des sägezahnförmigen Signals (B) durch den Spannungsverlauf an einem ersten Kondensator ($C_{ZFV}$) erzeugt werden, der über einen ersten Ladestrom ($I_{L1}$) geladen und mit einem ersten Entladestrom ($I_{E1}$) über einen mittelbar von einem ersten NOR-Gatter (NOR1) angesteuerten ersten Schalter ($S_1$) entladen wird.

ist, und daß am Ausgang dieser zweiten Komparatorstufe
($K_2$) ein Signal ($U_{R1}$) ansteht, mit dem die erste bistabile Kippstufe ($FF_1$) mit Beginn der Low-Phase dieses
Signals zurückgesetzt wird, zur Erzeugung der zweiten
Schaltflanke ($Y_2$) des zweiten Steuersignals ($U_2$) am
Ausgang der ersten bistabilen Kippstufe ($FF_1$).

8) Elektronisches Zündsystem nach einem der vorangehenden Ansprüche, dadurch gekennzeichnet, daß das Ausgangssignal ($U_{R1}$) der zweiten Komparatorstufe ($K_2$) dem negierenden Eingang des ersten NOR-Gatters ($NOR_1$) zugeführt ist, dessen anderer Eingang vom Ausgang ($Q_1$) der
ersten bistabilen Kippstufe ($FF_1$) mit dem zweiten Steuersignal ($U_2$) angesteuert wird.

9) Elektronisches Zündsystem nach einem der vorangehenden Ansprüche, dadurch gekennzeichnet, daß das zweite
Steuersignal ($U_2$) über ein erstes Negationsglied ($N_1$)
einem Eingang des ersten AND-Gatters ($A_1$) der Logikschaltung (3) zugeführt wird, dessen anderer Eingang
vom ersten Steuersignal ($U_1$) angesteuert wird, und daß
das Ausgangssignal ($U_{A1}$) des ersten AND-Gatters ($A_1$)
den zweiten Schalter ($S_2$) ansteuert und diesen für die
Dauer ($T_{C1}$) der High-Phase des Signals ($U_{A1}$) schließt.

10) Elektronisches Zündsystem nach einem der vorangehenden Ansprüche, dadurch gekennzeichnet, daß der Setzeingang ($S_2$) einer zweiten bistabilen Kippstufe ($FF_2$)
über ein Differenzierglied (D), dem das erste Steuersignal ($U_1$) zugeführt wird, von einem Setzsignal ($U_{S2}$)
angesteuert wird, das aus der High-Low Flanke des ersten Steuersignals ($U_1$) hervorgeht, und daß dem Reset-
Eingang der zweiten bistabilen Kippstufe ($FF_2$) das negierte zweite Steuersignal ($U_2$) zugeführt wird.

11) Elektronisches Zündsystem nach einem der vorangehenden Ansprüche, dadurch gekennzeichnet, daß das erste Steuersignal ($U_1$) und das Ausgangssignal ($U_{FF2}$) der zweiten bistabilen Kippstufe ($FF_2$) je einem Eingang eines zweiten NOR-Gatters ($NOR_2$) zugeführt sind, dessen Ausgangssignal ($U_{NOR2}$) dem dritten Schalter ($S_3$) zugeführt wird und diesen während der High-Phase des Signals $U_{NOR2}$ schließt.

12) Elektronisches Zündsystem nach Anspruch 11, dadurch gekennzeichnet, daß der sonst vom Ausgangssignal $U_{FF2}$ der zweiten bistabilen Kippstufe $FF_2$ angesteuerte Eingang des zweiten NOR-Gatters $NOR_2$ alternativ auf Massepotential liegt.

13) Elektronisches Zündsystem nach einem der vorangehenden Ansprüche, dadurch gekennzeichnet, daß die erste und zweite bistabile Kippstufe ($FF_1$, $FF_2$) nur dann gesetzt werden kann, wenn gleichzeitig mit dem Setzimpuls ($U_{S1}$, $U_{S2}$) am Reset-Eingang ($R_1$, $R_2$) ein High-Pegel ansteht, und daß das Ausgangssignal ($U_2$, $U_{FF2}$) der bistabilen Kippstufe ($FF_1$, $FF_2$) so lange gesetzt bleibt, wie der High-Pegel des entsprechenden Reset-Signals ($U_{Ri}$, $\overline{U}_2$) andauert.

14) Elektronisches Zündsystem nach Anspruch 3, dadurch gekennzeichnet, daß das zweite Steuersignal ($U_2$) anstatt direkt der Endstufe (4) einem Schließzeit-Regelkreis (7) zugeführt wird, über dessen Ausgangssignal ($U_3$) die Ansteuerung der Zündspule (5) erfolgt, wobei die erste Schaltflanke ($X_3$) des dritten Steuersignals ($U_3$) zeitlich mit der ersten Schaltflanke ($X_2$) des zweiten Steuersignals ($U_2$) zusammenfällt, während die zweite Schaltflanke ($Y_2$) des zweiten Steuersignals ($U_2$) durch die zweite Schaltflanke ($Y_3$) des dritten Steuer-

signals ($U_3$) ersetzt wird, welche in Abhängigkeit der elektrischen Betriebsparameter ($R_{PR}$, $L_{PR}$, $I_{PR}$, $U_{Batt}$, n, T) des Zündsystems aus einem auf diese Parameter optimal abgestimmten Regelkriterium in einer Regelschleife des Schließzeit-Regelkreises (7) gewonnen wird.

15) Elektronisches Zündsystem nach einem der vorangehenden Ansprüche, dadurch gekennzeichnet, daß sich der erste Ladestrom ($I_{L1}$) des ersten Kondensators ($C_{ZFV}$) aus Stromkomponenten ($I_6$, $I_4$) von Konstantstromquellen zusammensetzt, die am spannungsführenden Anschluß des ersten Kondensators ($C_{ZFV}$) zusammengeführt sind, und daß der einen Komponente ($I_6$) über einen Spannungs-Strom Wandler (U/I) mit einer eingangsseitigen Spannungskennlinie ($U_n$) ein ausgangsseitig proportionaler, gleichsinnig verlaufender Strom ($I_1$) überlagert wird, wodurch die ansteigende Flanke ($B_1$) des sägezahnförmigen Signals (B) in ihrer Steigung bestimmt ist.

16) Elektronisches Zündsystem nach einem der vorangehenden Ansprüche, dadurch gekennzeichnet, daß die eingangsseitige Spannungskennlinie ($U_n$) des Spannungs-Strom Wandlers (U/I) durch den Spannungsverlauf an einem dritten Kondensator ($C_t$) vorgegeben ist, der in einer definierten Übergangszeit ($t_{\ddot{u}}$) zwischen bestimmten festen Potentialen über eine Konstantstromquelle mit dem Strom ($I_3$) geladen oder über einen Schalter ($F_S$) und eine Konstantstromquelle mit dem Strom ($I_9$) entladen wird.

17) Elektronisches Zündsystem nach einem der vorangehenden Ansprüche, dadurch gekennzeichnet, daß der Schalter ($F_S$) durch einen ersten Transistor ($T_1$) realisiert ist, dessen Emitter auf Massepotential liegt und dessen Kollektor mit der Basis eines zweiten und dritten Tran-

sistors ($T_2$, $T_3$) sowie dem Kollektor des zweiten Transistors ($T_2$) verbunden ist und die zusammengeschalteten Emitter des zweiten und dritten Transistors ($T_2$, $T_3$) über einen gesteuerten Schalter ($S_{St}$) auf Massepotential oder auf eine feste Steuerspannung ($U_{St}$) geschaltet werden, und daß der Kollektor des dritten Transistors ($T_3$) mit dem spannungführenden Anschluß des dritten Kondesators ($C_t$) verbunden ist.

18) Elektronisches Zündsystem nach einem der vorangehenden Ansprüche, dadurch gekennzeichnet, daß die Kollektoren des zweiten und dritten Transistors ($T_2$, $T_3$) über je einen Kollektorausgang der Einströmerbank ($T_4$, $T_5$, $T_6$) mit dem Strom ($I_3$) gespeist werden, und daß das Emitterflächenverhältnis des zweiten ($T_2$) und dritten Transistors ($T_3$) sich wie 1:2 verhält.

19) Elektronisches Zündsystem nach einem der vorangehenden Ansprüche, dadurch gekennzeichnet, daß dem positiven Eingang eines dritten Komparators ($K_3$) die Spannung der Spannungskennlinie ($U_n$) und seinem negativen Eingang die feste Steuerspannung ($U_{St}$) zugeführt ist, und daß die Ausgangsspannung ($U_{K3}$) des dritten Komparators ($K_3$) einem Eingang eines zweiten AND-Gatters ($A_2$) zugeführt ist, dessen anderem, negierenden Eingang die eine Ausgangsspannung ($U_{F2}$) eines Drehzahldiskriminators (DIS) zugeführt ist.

20) Elektronisches Zündsystem nach einem der vorangehenden Ansprüche, dadurch gekennzeichnet, daß die Basis des ersten Transistors ($T_1$) vom Ausgang eines dritten NOR-Gatters ($NOR_3$) angesteuert wird, dessen einer Eingang vom Ausgang des zweiten AND-Gatters ($A_2$) und dessen anderer Eingang von der anderen Ausgangsspannung ($U_{F1}$) des Drehzahldiskriminators (DIS) angesteuert wird.

21) Elektronisches Zündsystem nach einem der vorangehenden Ansprüche, dadurch gekennzeichnet, daß das erste Steuersignal ($U_1$) einem Drehzahlmesser (DZM) zugeführt ist, der drehzahlabhängige digitale Ausgangssignale ($U_{n1}$, $U_{n2}$, $U_{n3}$) liefert, die dem Drehzahldiskriminator (DIS) zugeführt werden.

22) Elektronisches Zündsystem nach einem der vorangehenden Ansprüche, dadurch gekennzeichnet, daß der Schalter (FS) über die Signale ($U_{F1}$ bzw. $U_{A2}$) jederzeit so gesteuert werden kann, daß ein Potentialübergang am dritten Kondensator ($C_t$) sofort eingeleitet wird.

23) Elektronisches Zündsystem nach einem der vorangehenden Ansprüche, dadurch gekennzeichnet, daß das zweite Ausgangssignal ($U_{n2}$) des Drehzahlmessers (DZM) dem negierenden Eingang eines ersten und dem nicht negierenden Eingang eines zweiten NAND-Gatters ($NAND_1$, $NAND_2$) zugeführt wird, und daß dem anderen Eingang des ersten NAND-Gatters ($NAND_1$) das erste Ausgangssignal ($U_{n1}$) und dem negierenden Eingang des zweiten Nand-Gatters ($NAND_2$) das dritte Ausgangssignal ($U_{n3}$) des Drehzahlmessers (DZM) zugeführt werden.

24) Elektronisches Zündsystem nach einem der vorangehenden Ansprüche, dadurch gekennzeichnet, daß einem vierten NOR-Gatter ($NOR_4$) mit der Ausgangsspannung ($U_{F1}$) und einem OR-Gatter (OR) mit der Ausgangsspannung ($U_{F2}$) motorspezifische Steuersignale (VS, LS, TS, $U_{BS}$) zugeführt werden, und daß ein weiterer Eingang des vierten NOR-Gatters ($NOR_4$) vom Ausgangssignal ($D_1$) des ersten NAND-Gatters ($NAND_1$) und ein weiterer Eingang des OR-Gatters (OR) vom Ausgangssignal ($D_2$) des zweiten NAND-Gatters ($NAND_2$) angesteuert wird.

25) Elektronisches Zündsystem nach einem der vorangehenden Ansprüche, dadurch gekennzeichnet, daß über Stromspiegelschaltungen mit weiteren Transistoren ($T_7$, $T_8$, $T_9$, $T_{10}$) ein zum Spannungsverlauf der Kennlinie ($U_n$) am dritten Kondensator ($C_t$) gegensinniger proportionaler Stromverlauf eines Stromes ($I_1^*$) über den Spannungs-Strom Wandler (U/I) erzeugt wird.

26) Elektronisches Zündsystem nach einem der vorangehenden Ansprüche, dadurch gekennzeichnet, daß die Steuerkennlinie ($U_n$) auf eine Verringerung der Stickoxid Emissionswerte von Brennkraftmaschinen ausgelegt ist.

27) Elektronisches Zündsystem nach einem der vorangehenden Ansprüche, dadurch gekennzeichnet, daß der Steuerkennlinie ($U_n$) über eine Analogrechnerschaltung (AR) weitere motorspezifische, über Sensoren in elektrische Signale gewandelte Parameterkennlinien ($U_T$, $U_p$) zu einer Multifunktionskennlinie ($U_{KM}$) überlagert werden, die dem Spannungs-Strom Wandler (U/I) zugeführt wird.

FIG.1

FIG. 2a
FIG. 2b
FIG. 2c
FIG. 2d
FIG. 2e
FIG. 2f
FIG. 2g
FIG. 2h
FIG. 2i
FIG. 2j
FIG. 2k
FIG. 2L
FIG. 2m
FIG. 2n
FIG. 2o

0209781

FIG.3

FIG.4a
FIG.4b
FIG.4c
FIG.4d
FIG.4e
FIG.4f
FIG.4g
FIG.4h
FIG.4i
FIG.4j
FIG.4k

FIG. 5

FIG. 6a

FIG. 6b

FIG. 6c

FIG. 6d

FIG.7

FIG. 8a

FIG. 8b

FIG. 9

0209781

$^8/_{13}$

FIG.10

FIG.11a
FIG.11b
FIG.11c
FIG.11d
FIG.11e
FIG.11f
FIG.11g
FIG.11h
FIG.11i
FIG.11j
FIG.11k

0209781

9/13

FIG.12

FIG.13

FIG.14

FIG.15

FIG.16

FIG.17a

FIG.17b

FIG.17c

0209781

FIG 18

FIG.19

13/13

0209781

FIG.20a

FIG.20b

FIG.20c